# EUROPÄISCHE PATENTSCHRIFT

(11) **EP 1 826 220 B1**
(45) Veröffentlichungstag und Bekanntmachung des Hinweises auf die Patenterteilung: **22.12.2010**
(21) Anmeldenummer: 07002963.2
(22) Anmeldetag: 13.02.2007
(51) Int. Cl.: C08C 19/08, C08C 19/02

(54) **Verwendung von Katalysatoren mit erhöhter Aktivität für die Metathese von Nitrilkautschuken**
Use of catalysts with increased activity for the metathesis of nitrile rubber
Utilisation de catalyseurs à activité accrue pour la métathèse de caoutchoucs nitriles

(30) Priorität: 22.02.2006 DE 102006008521
(43) Veröffentlichungstag der Anmeldung: 29.08.2007
(73) Patentinhaber: LANXESS Deutschland GmbH, 51369 Leverkusen (DE)
(72) Erfinder: Obrecht, Werner, Dr., 47447 Moers (DE); Ong, Christopher, Dr., 51375 Leverkusen (DE); Müller, Julia Maria, 89134 Blaustein (DE); Nuyken, Oskar, Prof. Dr. -Ing., 81927 München (DE)

(56) Entgegenhaltungen:
- WO-A-02/14376
- WO-A-2004/035596
- WO-A-2005/080456

## Beschreibung

Die vorliegende Erfindung betrifft die Verwendung spezieller Katalysatoren für den Metathese-Abbau von Nitrilkautschuk.

Unter Nitrilkautschuk, abgekürzt auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt.

Hydrierter Nitrilkautschuk, abgekürzt auch als "HNBR" bezeichnet, wird durch Hydrierung von Nitrilkautschuk hergestellt. Entsprechend sind in HNBR die C=C Doppelbindungen der einpolymerisierten Dieneinheiten ganz oder teilweise hydriert. Der Hydriergrad der einpolymerisierten Dieneinheiten liegt üblicherweise in einem Bereich von 50 bis 100%.

Hydrierter Nitrilkautschuk ist ein Spezialkautschuk, der über eine sehr gute Hitzebeständigkeit, eine hervorragende Beständigkeit gegen Ozon und Chemikalien sowie eine ausgezeichnete Ölbeständigkeit verfügt.

Die vorgenannten physikalischen und chemischen Eigenschaften des HNBR gehen einher mit sehr guten mechanischen Eigenschaften, insbesondere einer hohen Abriebfestigkeit. Aus diesem Grund hat HNBR breite Verwendung in den verschiedensten Anwendungsgebieten gefunden. HNBR wird beispielsweise eingesetzt für Dichtungen, Schläuche, Riemen und Dämpfungselemente im Automobilsektor, ferner für Statoren, Bohrlochdichtungen und Ventildichtungen im Bereich der Ölförderung sowie auch für zahlreiche Teile der Luftfahrtindustrie, der Elektroindustrie, des Maschinen- und des Schiffsbaus.

Am Markt kommerziell erhältliche HNBR Typen weisen üblicherweise eine Mooney-Viskosität (ML 1+4 bei 100°C) im Bereich von 55 bis 105 auf, was einem Gewichtsmittel des Molekulargewichts M_{w} (Bestimmungsmethode: Gelpermeationschromatographie (GPC) gegen Polystyroläquivalente) im Bereich von ca. 200.000 bis 500.000 entspricht. Die dabei zu messenden Polydispersitätsindizes PDI (PDI = M_{w} /Mₙ, wobei M_{w} das Gewichtsmittel und Mₙ das Zahlenmittel des Molekulargewichts darstellt), die eine Aussage über die Breite der Molekulargewichtsverteilung liefern, besitzen häufig einen Wert von 3 oder darüber. Der Restdoppelbindungsgehalt liegt üblicherweise in einem Bereich von 1 bis 18 % (bestimmt durch IR-Spektroskopie).

Der Verarbeitbarkeit von HNBR sind durch die relativ hohe Mooney-Viskosität starke Beschränkungen auferlegt. Für viele Anwendungen wäre ein HNBR Typ wünschenswert, der ein niedrigeres Molekulargewicht und damit eine niedrigere Mooney-Viskosität besitzt. Dies würde die Verarbeitbarkeit entscheidend verbessern.

In der Vergangenheit wurden zahlreiche Versuche unternommen, die Kettenlänge von HNBR durch Abbau zu verkürzen. Beispielsweise ist ein Molekulargewichtsabbau durch thermomechanische Behandlung (Mastikation) z. B. auf einem Walzwerk oder auch in einem Schneckenaggregat (EP-A-0 419 952) möglich. Dieser thermomechanische Abbau hat jedoch den Nachteil, dass durch partielle Oxidation funktionelle Gruppen wie Hydroxyl-, Keto-, Carbonsäure- und Ester-Gruppen in das Molekül eingebaut werden und zusätzlich die Mikrostrukur des Polymers substanziell geändert wird.

Die Herstellung von HNBR mit niedrigen Molmassen, entsprechend einer Mooney Viskosität (ML 1+4 bei 100°C) in einem Bereich kleiner 55 bzw. einem Zahlenmittel des Molekulargewichts von ca. Mₙ < 200.000 g /mol, war mittels etablierter Herstellungsverfahren lange Zeit nicht möglich, da einerseits bei der Hydrierung von NBR ein sprunghafter Anstieg der Mooney Viskosität erfolgt und andererseits die Molmasse des für die Hydrierung einzusetzenden NBR-Feedstocks nicht beliebig reduziert werden kann, da sonst die Aufarbeitung in den zur Verfügung stehenden großtechnischen Anlagen wegen zu hoher Klebrigkeit nicht mehr möglich ist. Die niedrigste Mooney Viskosität eines NBR-Feedstocks, die ohne Schwierigkeiten in einer etablierten großtechnischen Anlage aufarbeitbar ist, liegt bei ca. 30 Mooney-Einheiten (ML 1+4 bei 100°C). Die Mooney Viskosität des hydrierten Nitrilkautschuks, der mit einem solchen NBR-Feedstock erhalten wird, liegt in der Größenordnung von 55 Mooney-Einheiten (ML 1+4 bei 100°C).

Im neueren Stand der Technik wird dieses Problem gelöst, indem man das Molekulargewicht des Nitrilkautschuks vor der Hydrierung durch Abbau auf eine Mooney Viskosität (ML 1+4 bei 100°C) von weniger als 30 Mooney-Einheiten bzw. ein Zahlenmittel des Molekulargewichts von Mₙ < 70.000 g / mol reduziert. Den Abbau des Molekulargewichts erreicht man hierbei durch Metathese, bei der üblicherweise niedermolekulare 1-Olefine zugesetzt werden. Die Metathesereaktion wird zweckmäßigerweise im gleichen Lösungsmittel wie die Hydrierreaktion (in situ) durchgeführt, damit man den abgebauten NBR-Feedstock nach Beendigung der Abbaureaktion nicht aus dem Lösungsmittel isolieren muss, bevor man ihn der nachfolgenden Hydrierung unterwirft. Für die Katalyse der Metathese-Abbaureaktion verwendet man Metathesekatalysatoren, die gegenüber polaren Gruppen, insbesondere gegenüber Nitrilgruppen, tolerant sind.

In der WO-A-02/100905 und der WO-A-02/100941 wird ein Verfahren beschrieben, welches den Abbau von Nitrilkautschuk-Ausgangspolymeren durch Olefinmetathese und eine anschließende Hydrierung umfasst. Hierbei wird ein Nitrilkautschuk in einem ersten Schritt in Gegenwart eines Co-Olefins und eines speziellen Komplexkatalysators auf Osmium-, Ruthenium-, Molybdän- oder Wolfram-Basis umgesetzt und in einem zweiten Schritt hydriert. Erhältlich sind gemäß WO-A-02/100941 auf diesem Weg hydrierte Nitrilkautschuke mit einem Gewichtsmittel des Molekulargewichts (M_{w}) im Bereich von 30.000 bis 250.000, einer Mooney-Viskosität (ML 1+4 bei 100 °C) im Bereich von 3 bis 50 und einem Polydispersitätsindex PDI von kleiner 2.5.

Metathesekatalysatoren sind unter anderem aus der WO-A-96/04289 und WO-A-97/06185 bekannt. Sie besitzen die folgende prinzipielle Struktur: 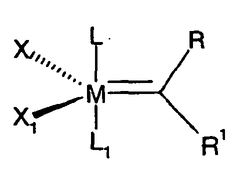 worin M für Osmium oder Ruthenium steht, R und R¹ organische Reste mit großer struktureller Variationsbreite darstellen, X und X₁ anionische Liganden und L sowie L₁ neutrale Elektronen-Donoren darstellen. Unter dem gängigen Begriff "anionische Liganden" werden in der Literatur für derartige Metathese-Katalysatoren immer solche Liganden verstanden, die, wenn man sie als vom Metall-Zentrum entfernt betrachtet, bei geschlossener Elektronenschale negativ geladen sind.

Derartige Katalysatoren sind geeignet für Ringschlussmetathesen (RCM), Kreuzmetathesen (CM) und Ringöffnungsmetathesen (ROMP). Für die Durchführung des Abbaus von Nitrilkautschuk sind die genannten Katalysatoren aber nicht zwangsläufig geeignet.

Mit einigen Katalysatoren aus der Gruppe der sogenannten "Grubbs (I) Katalysatoren" gelingt die Durchführung der Metathese von Nitrilkautschuk. Geeignet ist z.B. ein Ruthenium-Katalysator mit bestimmten Substituentenmustern, wie z.B. der nachfolgend dargestellte Katalysator Bis(tricyclohexylphosphin) benzyliden-rutheniumdichlorid.

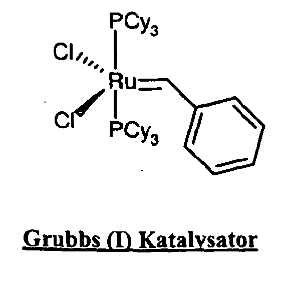

Nach Metathese und Hydrierung weisen die Nitrilkautschuke ein niedrigeres Molekulargewicht sowie eine engere Molekulargewichtsverteilung auf als die nach dem Stand der Technik herstellbaren hydrierten Nitrilkautschuke.

Die für die Durchführung der Metathese angewandten Mengen an Grubbs-(I)-Katalysator sind jedoch groß. Sie betragen gemäß den Beispielen in der WO-A-03/002613 307 ppm und 61 ppm Ru bezogen auf den eingesetzten Nitrilkautschuk. Die notwendigen Reaktionszeiten sind darüber hinaus lang und die Molekulargewichte auch nach dem Abbau noch immer relativ hoch (siehe Beispiel 3 der WO-A-03/002613 mit M_{w} = 180000 g/mol und Mₙ = 71000g/mol).

US 2004/0127647 A1 beschreibt Blends auf der Basis niedermolekularer HNBR-Kautschuke mit bi- bzw. multimodaler Molekulargewichtsverteilung sowie Vulkanisate dieser Kautschuke. Für die Durchführung der Metathese werden nach den Beispielen 0,5 phr an Grubbs-I-Katalysator entsprechend 614 ppm Ruthenium bezogen auf den eingesetzten Nitrilkautschuk verwendet.

Aus WO-A-00/71554 ist ferner eine Gruppe von Katalysatoren bekannt, die in der Fachwelt als "Grubbs (II) Katalysatoren" bezeichnet werden.

Verwendet man einen solchen "Grubbs(II) Katalysator" wie z.B. 1,3-Bis(2,4,6-trimethylphenyl)-2-imidazolidenyliden)(tricyclohexylphosphin)-ruthenium(phenylmethylen)dichlorid für die NBR-Metathese, gelingt diese auch ohne Verwendung eines Co-Olefins **(**US-A-2004/0132891**).** Nach der anschließenden Hydrierung, die in-situ durchgeführt wird, weist der hydrierte Nitrilkautschuk niedrigere Molekulargewichte und eine engere Molekulargewichtsverteilung (PDI) auf als bei Verwendung von Katalysatoren des Grubbs-(I)-Typs. Bezüglich des Molekulargewichts und der Molekulargewichtsverteilung verläuft somit der Metatheseabbau mit Katalysatoren des Typs Grubbs-II effizienter als mit Katalysatoren des Typs Grubbs-I. Allerdings sind die für diesen effizienten Metatheseabbau notwendigen Ruthenium-Mengen immer noch relativ hoch. Auch werden für die Durchführung der Metathese mit dem Grubbs-II-Katalysator immer noch lange Reaktionszeiten benötigt.

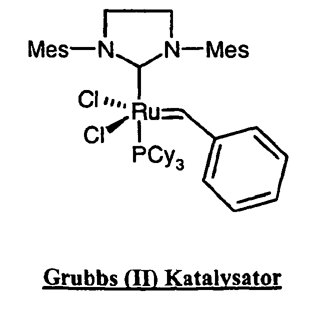

WO 2005/080456 offenbart die Verwendung von Katalysatoren des Typs Grubbs(II) zur Metathese von Nitrilkautschuken, wobei keine Co-Olefine zugesetzt werden müssen, mit anschließender in-situ Hydrierung, ohne daß der Zusatz anderer Katalysatoren (z.B. vom wilkinson-Typ) oder Co-Katalysatoren notwendig wäre.

Allen zuvor genannten Verfahren zum Metatheseabbau von Nitrilkautschuk ist gemeinsam, dass relativ große Katalysatormengen eingesetzt werden müssen und lange Reaktionszeiten benötigt werden, um die gewünschten niedermolekularen Nitrilkautschuke herzustellen.

Es bestand daher die Aufgabe, einen Katalysator zur Verfügung zu stellen, der einen Metatheseabbau von Nitrilkautschuk ohne Vergelung ermöglicht, gleichzeitig eine höhere Aktivität als die derzeit verfügbaren Metathesekatalysatoren aufweist und somit bei gleichem Edelmetallgehalt eine Erhöhung der Reaktionsgeschwindigkeit sowie die Einstellung niedrigerer Molekulargewichte des abgebauten Nitrilkautschuks ermöglicht.

Überraschenderweise konnte diese Aufgabe durch Verwendung von Katalysatoren der nachfolgend dargestellten allgemeinen Formel (I) gelöst werden.

Gegenstand der Erfindung ist die Verwendung von Katalysatoren der allgemeinen Formel (I) zur Metathese von Nitrilkautschuken, 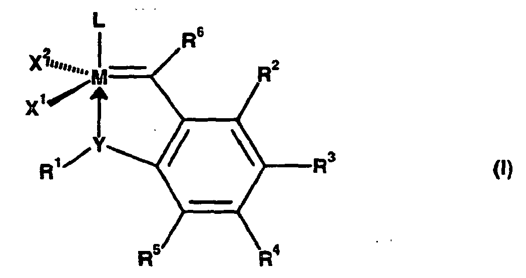 worin
- M: Ruthenium oder Osmium bedeutet,
- Y: Sauerstoff (O), Schwefel (S), einen Rest N-R¹ oder einen Rest P-R' bedeutet, wobei R¹ die nachfolgend genannten Bedeutungen besitzt,
- X¹ und X²: gleiche oder verschiedene Liganden darstellen,
- R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: Wasserstoff, einen Alkyl-, Alkenyl-, Alkinyl- oder einen Aryl-Rest bedeutet und
- L: ein Ligand ist.

Die Katalysatoren der allgemeinen Formel (I) sind prinzipiell bekannt. Vertreter dieser Verbindungsklasse sind die Katalysatoren, die von Hoveyda et al. in US 2002/0107138 A1 und Angew Chem. Int. Ed. 2003, 42, 4592 beschrieben sind, und die Katalysatoren, die von Grela in WO-A-2004/035596, Eur. J. Org. Chem 2003, 963-966 und Angew. Chem. Int. Ed. 2002, 41, 4038 sowie in J. Org. Chem. 2004, 69, 6894-96 und Chem. Eur. J 2004, 10, 777-784 beschrieben werden. Die Katalysatoren sind käuflich erhältlich bzw. gemäß den angegebenen Literaturstellen herstellbar.

Überraschenderweise gelingt es, unter Einsatz der Katalysatoren mit den Strukturmerkmalen der allgemeinen Formel (I) den Metatheseabbau von Nitrilkautschuk ohne Gelbildung durchzuführen wobei sich derartige Katalysatoren zusätzlich durch eine höhere Aktivität auszeichnen als Grubbs-II-Katalysatoren.

Der im Rahmen dieser Anmeldung verwendete Begriff "substituiert" bedeutet, dass ein Wasserstoff-Atom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

Im Rahmen dieser Anmeldung und Erfindung können alle zuvor und im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

In den Katalysatoren der allgemeinen Formel (I) steht L für einen Liganden, üblicherweise einen Liganden mit Elektronen-Donor-Funktion. L kann einen P(R⁷)₃ Rest darstellen, wobei R⁷ unabhängig voneinander C₁-C₆-Alkyl, C₃-C₈-Cycloalkyl oder Aryl bedeuten, oder aber einen gegebenenfalls substituierten Imidazolidinrest ("Im").

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphtyl, Phenanthrenyl oder Anthracenyl genannt.

Der Imidazolidinrest (**Im**) weist üblicherweise eine Struktur der allgemeinen Formeln (IIa) oder (IIb) auf, 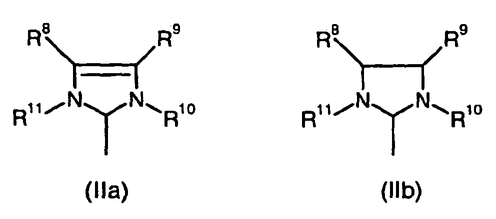 worin
- R⁸, R⁹, R¹⁰, R¹¹: gleich oder verschieden sind und Wasserstoff, geradkettiges oder verzweigtes C₁-C₃₀-Alkyl, bevorzugt C₁-C₂₀-Alkyl, C₃-C₂₀-Cycloalkyl, bevorzugt C₃-C₁₀-Cycloalkyl, C₂-C₂₀-Akenyl, bevorzugt C₂-C₁₀-Akenyl, C₂-C₂₀-Alkinyl, bevorzugt C₂-C₁₀-Alkinyl, C₆-C₂₄-Aryl, bevorzugt C₆-C₁₄-Aryl, C₁-C₂₀-Carboxylat, bevorzugt C₁-C₁₀-Carboxylat, C₁-C₂₀-Alkoxy, bevorzugt C₁-C₁₀-Alkoxy, C₂-C₂₀-Alkenyloxy, bevorzugt C₂-C₁₀-Alkenyloxy, C₂-C₂₀-Alkinyloxy, bevorzugt C₂-C₁₀-Alkinyloxy, C₆-C₂₀-Aryloxy, bevorzugt C₆-C₁₄-Aryloxy, C₂-C₂₀-Alkoxycarbonyl, bevorzugt C₂-C₁₀-Alkoxycarbonyl, C₁-C₂₀-Alkylthio, bevorzugt C₁-C₁₀-Alkylthio, C₆-C₂₀-Arylthio, bevorzugt C₆-C₁₄-Arylthio, C₁-C₂₀-Alkylsulfonyl, bevorzugt C₁-C₁₀-Alkylsulfonyl, C₁-C₂₀-Alkylsulfonat, bevorzugt C₁-C₁₀-Alkylsulfonat, C₆-C₂₀-Arylsulfonat, bevorzugt C₆-C₁₄-Arylsulfonat, und C₁-C₂₀-Alkylsulfinyl, bevorzugt C₁-C₁₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

In einer bevorzugten Ausführungsform der erfindungsgemäßen Katalysatoren der allgemeinen Formel (I) bedeuten R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der erfindungsgemäßen Katalysatoren sind die Reste R¹⁰ und R¹¹ gleich oder verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind diese als bevorzugt genannten Reste R¹⁰ und R¹¹ substituiert durch einen oder mehrere weitere Reste aus der Gruppe umfassend geradkettiges oder verzweigtes C₁-C₅-Alkyl, insbesondere Methyl, C₁-C₅-Alkoxy, Aryl und eine funktionelle Grupppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere sind die Reste R¹⁰ und R¹¹ gleich oder verschieden und bedeuten i-Propyl, Neopentyl, Adamantyl oder Mesityl.

Besonders bevorzugte Imidazolidinreste (Im) haben die nachfolgenden Strukturen (IIIa-f), wobei Mes jeweils für einen 2,4,6-Trimethylphenyl-Rest steht,

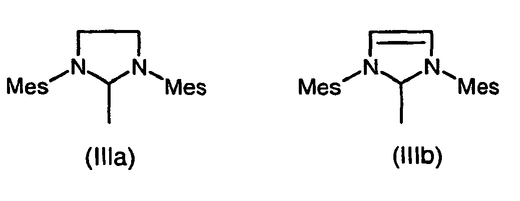

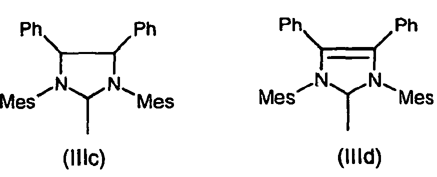

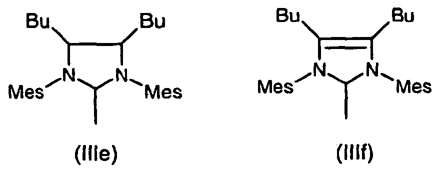

In den Katalysatoren der allgemeinen Formel (I) sind **X¹ und X²** gleich oder verschieden und können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl, wobei auch diese Reste gegebenenfalls wiederum durch ein oder mehrere Substituenten substituiert sind, die aus der Gruppe umfassend Halogen, bevorzugt Fluor, C₁-C₅-Alkyl, C₁-C₅-Alkoxy und Phenyl ausgewählt sind.

In einer bevorzugten Ausführungsform sind X¹ und X² gleich oder verschieden und bedeuten Halogen, insbesondere Fluor, Chlor oder Brom, Benzoat, C₁-C₅-Carboxylat, C₁-C₅-Alkyl, Phenoxy, C₁-C₅-Akoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (I) bedeutet der Rest R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl-, Halogen-, Alkoxy-, Aryl- oder Heteroaryl-Reste substituiert sein können.

Üblicherweise bedeutet der Rest R¹ einen C₁-C₃₀-Alkyl, C₃-C₂₀-Cylcoalkyl, C₂-C₁₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht R¹ für einen C₃-C₂₀-Cycloalkyl-Rest, einen C₆-C₂₄-Aryl-Rest oder einen geradkettigen oder verzweigten C₁-C₃₀-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht R¹ für einen geradkettigen oder verzweigten C₁-C₁₂-Alkyl-Rest.

Der C₃-C₂₀-Cycloalkyl-Rest umfasst beispielsweise Cyclopropyl, Cyclobutyl, Cylopentyl, Cyclohexyl, Cycloheptyl und Cyclooctyl.

Bei dem C₁-C₁₂-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht R¹ für Methyl oder Isopropyl.

Der C₆-C₂₄-Aryl-Rest steht für einen aromatischen Rest mit 6 bis 24 Gerüstkohlenstoffatomen. Als besonders bevorzugte mono-, bi- oder tricyclische carbocyclische aromatische Reste mit 6 bis 10 Gerüstkohlenstoffatomen seien beispielsweise Phenyl, Biphenyl, Naphtyl, Phenanthrenyl oder Anthracenyl genannt.

In der allgemeinen Formel (I) sind die Reste R², R³, R⁴ und R⁵ gleich oder verschieden und können Wasserstoff, organische oder anorganische Reste darstellen.

In einer geeigneten Ausführungsform sind R², R³, R⁴, R⁵ gleich oder verschieden und bedeuten Wasserstoff, Halogen, Nitro, CF₃, Alkyl, Cycloalkyl, Alkenyl, Alkinyl, Aryl, Alkoxy, Alkenyloxy, Alkinyloxy, Aryloxy, Alkoxycarbonyl, Alkylamino, Alkylthio, Arylthio, Alkylsulfonyl oder Alkylsulfinyl, die alle jeweils optional durch ein oder mehrere Alkyl-, Alkoxy-, Halogen-, Aryl- oder Heteroaryl-Reste substituiert sein können.

Üblicherweise sind R², R³, R⁴, R⁵ gleich oder verschieden und bedeuten Wasserstoff, Halogen, bevorzugt Chlor oder Brom, Nitro, CF₃, C₁-C₃₀-Alkyl, C₃-C₂₀-Cycloalkyl, C₂-C₂₀-Akenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl, die alle jeweils optional durch ein oder mehrere C₁-C₃₀-Alkyl-, C₁-C₂₀-Alkoxy-, Halogen-, C₆-C₂₄-Aryl- oder Heteroaryl-Reste substituiert sein können.

In einer besonders bewährten Ausführungsform sind R², R³, R⁴, R⁵ sind gleich oder verschieden und stehen für Nitro, geradkettige oder verzweigte C₁-C₃₀-Alkyl-, C₆-C₂₀-Cylcoalkyl-, geradkettige oder verzweigte C₁-C₂₀-Alkoxy-Reste oder C₆-C₂₄-Aryl-Reste, bevorzugt Phenyl oder Naphthyl. Die C₁-C₃₀-Alkyl-Reste sowie C₁-C₂₀-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste R², R³, R⁴ oder R⁵ über aliphatische oder aromatische Strukturen verbrückt sein. R³ und R⁴ können beispielsweise unter Einbeziehung der Kohlenstoff-Atome, an die sie im Phenylring der Formel (I) gebunden sind, einen ankondensierten Phenylring bilden, so dass insgesamt eine Naphthylstruktur resultiert.

In der allgemeinen Formel (I) bedeutet R⁶ Wasserstoff, einen Alkyl-, Alkenyl-, Alkinyl- oder einen Aryl-Rest. Bevorzugt bedeutet R⁶ Wasserstoff, einen C₁-C₃₀-Alkyl, einen C₂-C₂₀-Alkenyl-, einen C₂-C₂₀-Alkinyl oder einen C₆-C₂₄-Aryl-Rest. Besonders bevorzugt ist R⁶ Wasserstoff.

Für die erfindungsgemäße Verwendung eignen sich besonders Katalysatoren gemäß der allgemeinen Formel (IV) 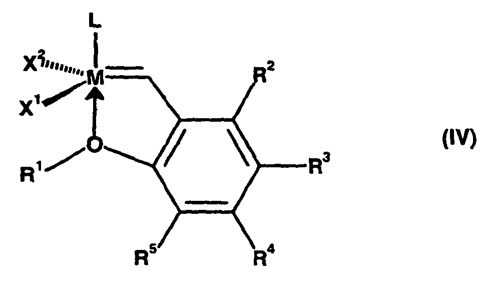 worin
- M, L, X¹, X², R¹, R², R³, R⁴ und R⁵: die für die allgemeine Formel (I) genannten Bedeutungen besitzen.

Diese Katalysatoren sind beispielsweise aus US 2002/0107138 A1 (Hoveyda et al.**)** prinzipiell bekannt und können nach dort angegebenen Herstellverfahren erhalten werden.

Besonders bevorzugt sind Katalysatoren der allgemeinen Formel (IV), wobei
- M: Ruthenium ist,
- X¹ und X²: gleichzeitig Halogen, insbesondere gleichzeitig Chlor bedeuten,
- R¹: für einen geradkettigen oder verzweigten C₁-C₁₂ Alkylrest steht,
- R², R³, R⁴, R⁵: die für die allgemeine Formel (I) genannten Bedeutungen besitzen und
- L: die für die allgemeine Formel (I) genannten Bedeutungen besitzt.

Inbesondere bevorzugt sind Katalysatoren der allgemeinen Formel (IV), wobei
- M: Ruthenium darstellt,
- X¹ und X²: gleichzeitig Chlor bedeuten,
- R¹: für einen Isopropyl-Rest steht,
- R², R³, R⁴, R⁵: alle Wasserstoff bedeuten und
- L: einen gegebenenfalls substituierten Imidazolidin-Rest der Formeln (IIa) oder (IIb) darstellt, 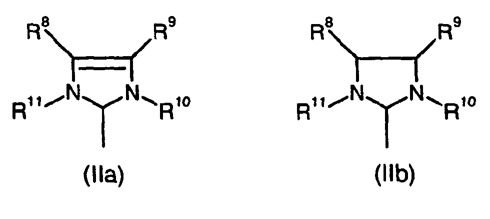
worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten.

Ganz besonders bevorzugt ist als Katalysator, der unter die allgemeine Strukturformel (IV) fällt, derjenige der folgenden Formel (V) 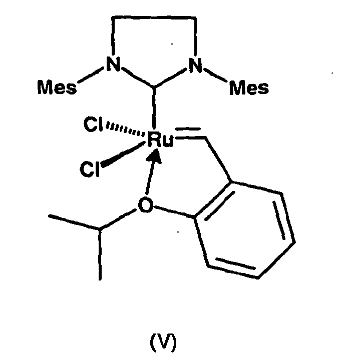 der in der Literatur auch als "Hoveyda-Katalysator" bezeichnet wird.

Weiterhin geeignete Katalysatoren, die unter die allgemeine Strukturformel (IV) fallen, sind solche der folgenden Formeln (VI), (VII), (VIII), (IX), (X), (XI), (XII) und (IXX), wobei Mes jeweils einen 2,4,6-Trimethylphenyl-Rest bedeutet.

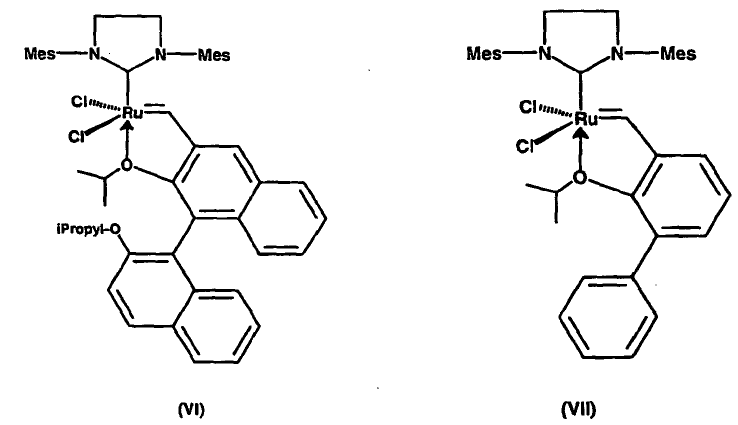

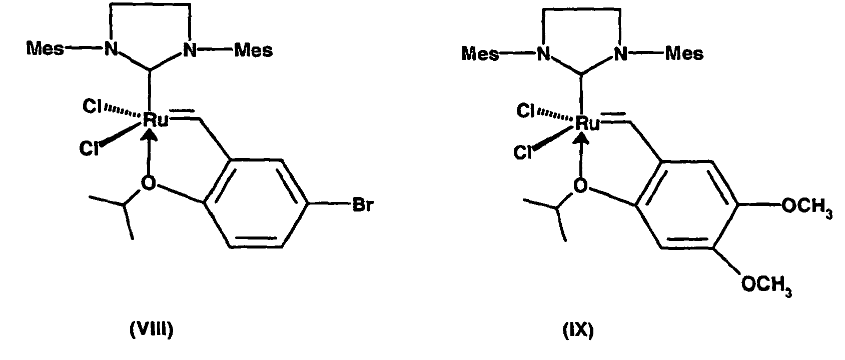

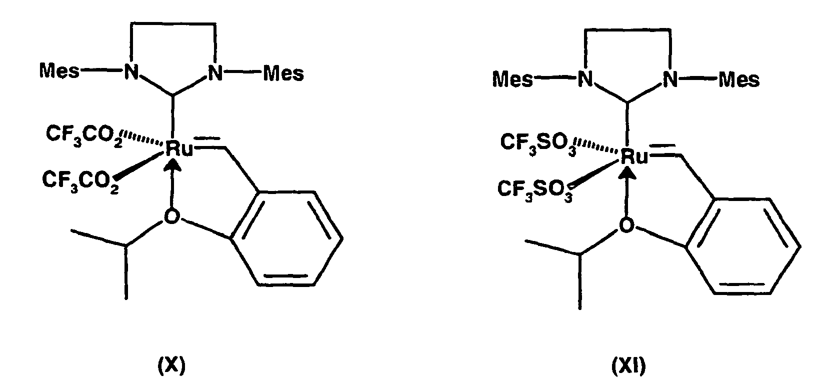

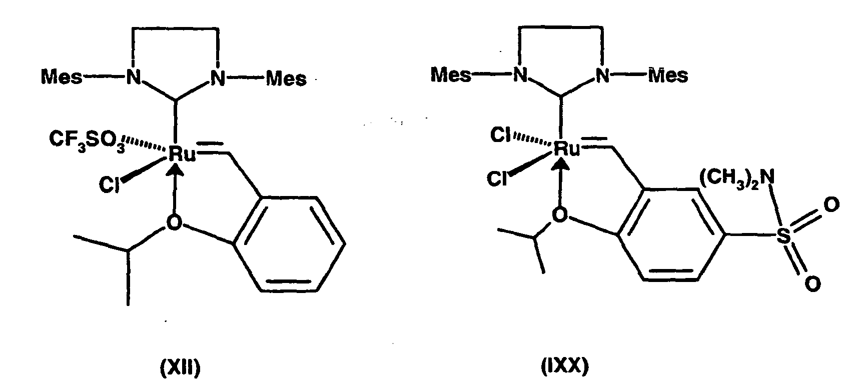

Für die erfindungsgemäße Verwendung eignen sich ferner besonders Katalysatoren gemäß der allgemeinen Formel (XIII) 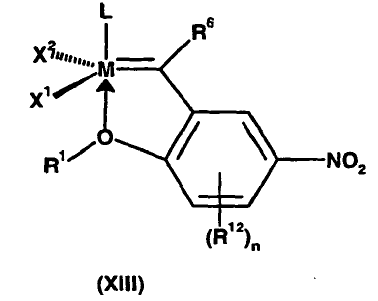 worin
- M, L, X¹, X², R¹ und R⁶: die für die allgemeine Formel (I) genannten Bedeutungen haben,
- R¹²: gleich oder verschieden sind und die für die Reste R², R³, R⁴ und R⁵ genannten Bedeutungen, ausgenommen Wasserstoff, besitzen und
- n: gleich 0, 1, 2 oder 3 ist.

Diese Katalysatoren sind beispielsweise aus WO-A-2004/035596 (Grela**)** prinzipiell bekannt und können nach dort angegebenen Herstellverfahren erhalten werden.

Besonders bevorzugt sind Katalysatoren der allgemeinen Formel (XIII), wobei
- M: Ruthenium ist,
- X¹ und X²: gleichzeitig Halogen, insbesondere gleichzeitig Chlor bedeuten,
- R¹: für einen geradkettigen oder verzweigten C₁-C₁₂ Alkylrest steht,
- R¹²: die für die allgemeine Formel (I) genannten Bedeutungen besitzt,
- n: gleich 0, 1, 2 oder 3 ist und
- L: die für die allgemeine Formel (I) genannten Bedeutungen besitzt.

Inbesondere bevorzugt sind Katalysatoren der allgemeinen Formel (XIII), wobei
- M: Ruthenium darstellt,
- X¹ und X²: gleichzeitig Chlor bedeuten,
- R¹: für einen Isopropyl-Rest steht,
- n: gleich 0 ist und
- L: einen gegebenenfalls substituierten Imidazolidin-Rest der Formeln (IIa) oder (IIb) darstellt, 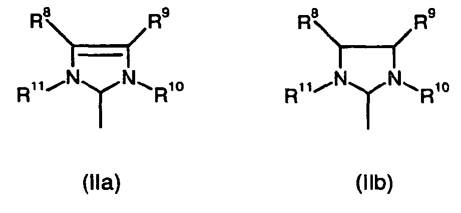
worin
- R⁸, R⁹, R¹⁰, R¹¹: gleich oder verschieden sein können und Wasserstoff, geradkettiges oder verzweigtes, cyclisches oder acyclisches C₁-C₃₀-Alkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat und C₁-C₂₀-Alkylsulfinyl bedeuten.

Ein besonders geeigneter Katalysator, der unter die allgemeine Formel (XIII) fällt, besitzt folgende Struktur (XIV) 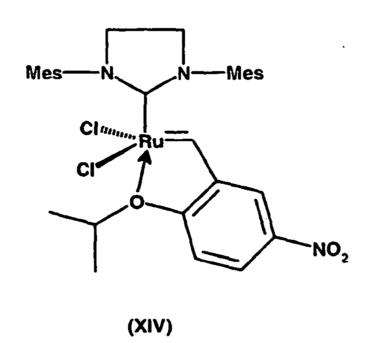 und wird in der Literatur auch als "Grela-Katalysator" bezeichnet.

Ein weiterer geeigneter Katalysator, der unter die allgemeine Formel (XIII) fällt, besitzt folgende Struktur (XV)

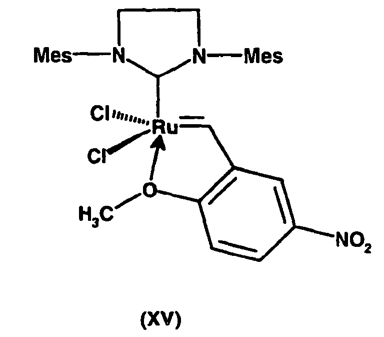

In einer alternativen Ausführungsform sind auch dendritisch aufgebaute Katalysatoren der allgemeinen Formel (XVI) einsetzbar, 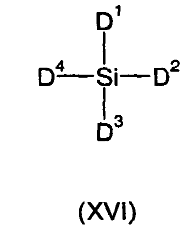 worin D¹, D², D³ und D⁴ jeweils eine Struktur der allgemeinen Formel (XVII) aufweisen, die über die Methylengruppe an das Silicium der Formel (XVI) angebunden ist und 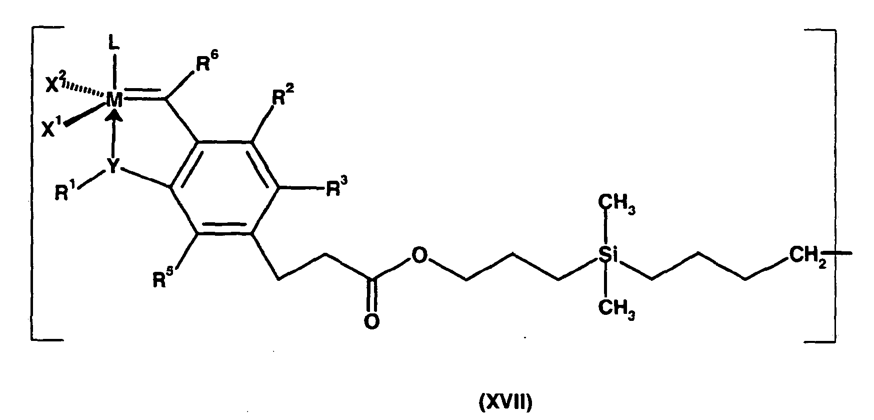 worin
- M, L, X¹, X², R¹, R², R³, R⁵ und R⁶: die für die allgemeine Formel (I) genannten Bedeutungen besitzen oder auch die für alle zuvor genannten bevorzugten oder besonders bevorzugten Ausführungsformen aufgeführten Bedeutungen besitzen können.

Derartige Katalysatoren gemäß der allgemeinen Formel (XVI) sind aus US 2002/0107138 A1 bekannt und gemäß den dort gemachten Angaben herstellbar.

In einer weiteren alternativen Ausführungsform ist ein Katalysator der allgemeinen Formel (XVIII) einsetzbar, 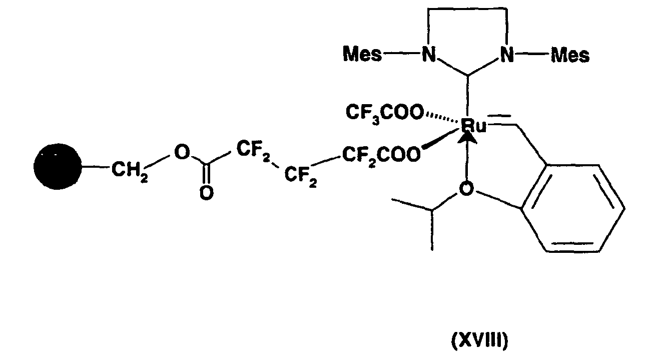 worin das Symbol 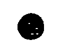 für einen Träger steht.

Bevorzugt handelt es sich bei dem Träger um ein Poly(styroldivinylbenzol)-Copolymer (PS-DVB).

Dieser Katalysator gemäß Formel (XVIII) ist aus Chem. Eur. J. 2004 10, 777-784 prinzipiell bekannt und nach dort beschriebenen Herstellmethoden erhältlich.

Alle vorgenannten Katalysatoren der Formeln (I), (IV)-(XVI), (XVIII) und (IXX) können entweder als solche zur NBR-Metathese eingesetzt werden oder aber auch auf einen festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele.

Die Katalysatoren aller vorgenannten allgemeinen und speziellen Formeln (I), (IV) - (XVI), (XVIII) und (IXX) eignen sich hervorragend zum Metathese-Abbau von Nitrilkautschuk.

Im Rahmen der erfindungemäßen Verwendung unterwirft man einen Nitrilkautschuk einer Metathese-Reaktion in Gegenwart eines Katalysators der allgemeinen Formel (I).

Die Menge des erfindungsgemäß für die Metathese eingesetzten Katalysators hängt von der Natur sowie der katalytischen Aktivität des speziellen Katalysators ab. Die Menge an eingesetztem Katalysator beträgt 5 bis 1.000 ppm Edelmetall, bevorzugt 5 bis 500 ppm, insbesondere 5 bis 250 ppm, bezogen auf den eingesetzten Nitrilkautschuk.

Die NBR-Metathese kann ohne oder aber auch in Gegenwart eines Co-Olefins durchgeführt werden. Bei diesem handelt es sich bevorzugt um ein geradkettiges oder verzweigtes C₂-C₁₆-Olefin. Geeignet sind beispielsweise Ethylen, Propylen, Isobuten, Styrol, 1-Hexen oder 1-Octen. Bevorzugt wird 1-Hexen oder 1-Octen verwendet. Sofern das Co-Olefin flüssig ist (wie beispielsweise 1-Hexen), liegt die Menge des Co-Olefins bevorzugt in einem Bereich von 0,2-20 Gew.% bezogen auf den eingesetzten Nitrilkautschuk. Sofern das Co-Olefin ein Gas ist, wie beispielsweise Ethylen, wird die Menge des Co-Olefins so gewählt, dass sich im Reaktionsgefäß bei Raumtemperatur ein Druck im Bereich von 1 x 10⁵ Pa - 1 x 10⁷ Pa einstellt, bevorzugt ein Druck im Bereich von 5,2 x 10⁵ Pa bis 4 x 10⁶ Pa.

Die Metathese-Reaktion kann in einem geeigneten Lösungsmittel durchgeführt werden, welches den eingesetzten Katalyator nicht deaktiviert und die Reaktion auch nicht in irgendeiner anderen Weise negativ beeinflusst. Bevorzugte Lösungsmittel umfassen, sind aber nicht begrenzt auf, Dichlormethan, Benzol, Toluol, Methylethylketon, Aceton, Tetrahydrofuran, Tetrahydropyran, Dioxan und Cyclohexan. Das besonders bevorzugte Lösungsmittel ist Chlorbenzol. In manchen Fällen, wenn das Co-Olefin selbst als Lösungsmittel fungieren kann, so z.B. bei 1-Hexen, kann auch auf den Zusatz eines weiteren zusätzlichen Lösungsmittels verzichtet werden.

Die Konzentration des eingesetzten Nitrilkautschuks in der Reaktionsmischung der Metathese ist nicht kritisch, aber es ist natürlich zu beachten, dass die Reaktion nicht durch eine viel zu hohe Viskosität der Reaktionsmischung und die damit verbundenen Mischungsprobleme negativ beeinflusst werden sollte. Bevorzugt liegt die Konzentration des NBR in der Reaktionsmischung im Bereich von 1 bis 20 Gew.%, besonders bevorzugt im Bereich von 5 bis 15 Gew.%, bezogen auf die gesamte Reaktionsmischung.

Der Metathese-Abbau wird üblicherweise bei einer Temperatur im Bereich von 10 bis 150°C durchgeführt, bevorzugt im Bereich von 20 bis 100 °C.

Die Reaktionszeit hängt von einer Reihe von Faktoren ab, beispielsweise vom Typ des NBR, der Art des Katalysators, der verwendeten Katalysator-Konzentration und der Reaktionstemperatur. Typischerweise ist die Reaktion innerhalb von drei Stunden unter normalen Bedingungen beendet. Der Fortschritt der Metathese kann durch Standard-Analytik überwacht werden, z.B. durch GPC-Messungen oder durch Bestimmung der Viskosität verfolgt werden.

Als Nitrilkautschuke ("NBR") können in die Metathese-Reaktion Co- oder Terpolymere eingesetzt werden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

Das konjugierte Dien kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Einen besonders bevorzugten Nitrilkautschuk stellt somit ein Copolymer aus Acrylnitril und 1,3-Butadien dar.

Neben dem konjugierten Dien und dem α,β-ungesättigten Nitril können noch ein oder mehrere weitere, dem Fachmann bekannte copolymerisierbare Monomere eingesetzt werden, z.B. α,β-ungesättigte Mono- oder Dicarbonsäuren, deren Ester oder Amide. Als α,β-ungesättigte Mono- oder Dicarbonsäuren sind Fumarsäure, Maleinsäure, Acrylsäure und Methacrylsäure bevorzugt. Als Ester der α,β-ungesättigten Carbonsäuren werden vorzugsweise deren Alkylester und Alkoxyalkylester eingesetzt. Besonders bevorzugte Alkylester der α,β-ungesättigten Carbonsäuren sind Methylacrylat, Ethylacrylat, Butylacrylat, Butylmethacrylat, 2-Ethylhexylacrylat, 2-Ethylhexylmethacrylat und Octylacrylat. Besonders bevorzugte Alkoxyalkylester der α,β-ungesättigten Carbonsäuren sind Methoxyethyl(meth)acrylat, Ethoxyethyl(meth)acrylat und Methoxyethyl(meth)acrylat. Einsetzbar sind auch Mischungen von Alkylestern, wie z.B. den vorgenannten, mit Alkoxyalkylestem, z.B. in Form der vorgenannten.

Die Anteile an konjugiertem Dien und α,β-ungesättigtem Nitril in den einzusetzenden NBR-Polymeren können in weiten Bereichen schwanken. Der Anteil des oder der Summe der konjugierten Diene liegt üblicherweise im Bereich von 40 bis 90 Gew.-%, bevorzugt im Bereich von 55 bis 75 Gew. %, bezogen auf das Gesamtpolymer. Der Anteil des oder der Summe der α,β-ungesättigten Nitrile liegt üblicherweise bei 10 bis 60 Gew.-%, bevorzugt bei 25 bis 45 Gew.-%, bezogen auf das Gesamtpolymer. Die Anteile der Monomere summieren sich jeweils zu 100 Gew.-% auf. Die zusätzlichen Monomere können in Mengen von 0 bis 40 Gew.%, bevorzugt 0,1 bis 40 Gew.-%, besonders bevorzugt 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung der Nitrilkautschuke durch Polymerisation der vorgenannten Monomere ist dem Fachmann hinlänglich bekannt und in der Polymerliteratur umfangreich beschrieben.

Nitrilkautschuke, die im erfindungsgemäßen Sinn verwendet werden können, sind ferner käuflich erhältlich, z.B. als Produkte aus der Produktreihe der Marken Perbunan^{®} und Krynac^{®} von der Lanxess Deutschland GmbH.

Die zur Metathese eingesetzten Nitrilkautschuke besitzen eine Mooney-Viskosität (ML 1+4 bei 100°C) im Bereich von 30 bis 70, bevorzugt von 30 bis 50. Dies entspricht einem Gewichtsmittel des Molekulargewicht M_{w} im Bereich von 200.000 - 500.000, bevorzugt im Bereich von 200.000 - 400.000. Die eingesetzten Nitrilkautschuke besitzen ferner eine Polydispersität PDI = M_{w}/Mₙ, wobei M_{w} das Gewichtsmittel und Mₙ das Zahlenmittel des Molekulargewichts darstellt, im Bereich von 2,0 - 6,0 und bevorzugt im Bereich von 2,0 - 4,0.

Die Bestimmung der Mooney-Viskosität erfolgt dabei gemäß ASTM Norm D 1646.

Die durch das erfindungsgemäße Metathese-Verfahren erhaltenen Nitrilkautschuke besitzen eine Mooney-Viskosität (ML 1+4 @100°C) im Bereich von 5 - 30, bevorzugt von 5 - 20 Dies entspricht einem Gewichtsmittel des Molekulargewichts M_{w} im Bereich von 10.000- 200.000, bevorzugt im Bereich von 10.000-150.000. Die erhaltenen Nitrilkautschuke besitzen ferner eine Polydispersität PDI = M_{w}/Mₙ, wobei Mₙ das Zahlenmittel des Molekulargewichts darstellt, im Bereich 1,5 - 4,0 bevorzugt im Bereich von 1,7 - 3.

An das erfindungsgemäße Verfahren des Metathese-Abbaus kann sich eine Hydrierung der erhaltenen abgebauten Nitrilkautschuke anschließen. Diese kann in der dem Fachmann bekannten Art und Weise erfolgen.

Es ist möglich, die Hydrierung unter Einsatz homogener oder heterogener Hydrierkatalysatoren durchzuführen. Es ist ferner möglich, die Hydrierung in-situ durchzuführen, d.h. in dem gleichen Reaktionsgefäß, in dem zuvor auch der Metathese-Abbau erfolgte und ohne Notwendigkeit den abgebauten Nitrilkautschuk zu isolieren. Der Hydrierkatalysator wird einfach dem Reaktionsgefäß zugesetzt.

Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-2 539 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im folgenden beschrieben und sind auch aus DE-A-25 39 132 und der EP-A-0 471250 bekannt

Die selektive Hydrierung kann beispielsweise in Gegenwart eines Rhodium-oder Rutheniumhaltigen Katalysators erreicht werden. Einsetzbar ist beispielsweise ein Katalysator der allgemeinen Formel

(R¹ₘB)₁ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe (S=O), X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers ist geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkyl-monocycloalkyl, Dicycloalkyl-monoaryl oder Dicyclalkyl-monoaryl Resten.

Beispiele von Co-Katalysatoren finden sich beispielsweise in US-A-4,631,315**.** Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden.

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert ist.

Nach Abschluss der Hydrierung erhält man einen hydrierten Nitrilkautschuk mit einer Mooney-Viskosität (ML 1+4 bei 100°C), gemessen gemäß ASTM Norm D 1646, im Bereich von 10 bis 50, bevorzugt von 10 bis 30. Dies entspricht einem Gewichtsmittel des Molekulargewicht M_{w} im Bereich von 2.000 - 400.000 g/mol, bevorzugt im Bereich von 20.000 - 200.000. Die erhaltenen hydrierten Nitrilkautschuke besitzen ferner eine Polydispersität PDI= M_{w}/Mₙ, wobei M_{w} das Gewichtsmittel und Mₙ das Zahlenmittel des Molekulargewichts darstellt, im Bereich von 1- 5 und bevorzugt im Bereich von 1,5 - 3.

### BEISPIELE

### Metathese Abbau von Nitrilkautschuk in Gegenwart verschiedener Ru-Katalysatoren

In den nachfolgenden Beispielen wird gezeigt, dass bei jeweils gleicher Ruthenium-Dosierung die Metatheseaktivität der Katalysatoren der allgemeinen Strukturformel (I) höher ist, als bei Verwendung des Grubbs-II-Katalysators.

Eingesetzt wurden folgende Katalysatoren:
**"Hoveyda-Katalysator" (erfindungsgemäß):**

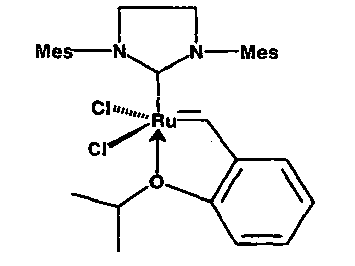

Der Hoveyda-Katalysator wurde von Aldrich unter der Produktnummer 569755 bezogen.

**"Grela-Katalysator" (erfindungsgemäß):**

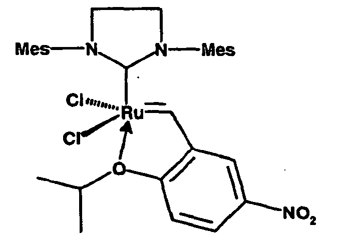

Der Grela-Katalysator wurde nach der in J. Org. Chem. 2004, 69, 6894-6896 publizierten Vorschrift hergestellt.

**Grubbs II-Katalysator (Vergleich):**

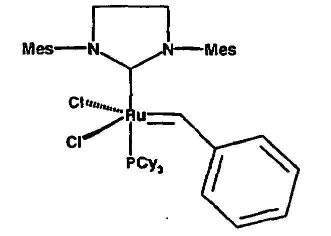

Der Grubbs-II-Katalysator wurde von der Firma Materia (Pasadena/Kalifornien) bezogen.

Die nachfolgend beschriebenen Abbaureaktionen wurden unter Einsatz des Nitrilkautschuks Perbunan^{®} NT 3435 der Lanxess Deutschland GmbH durchgeführt. Dieser Nitrilkautschuk wies folgende charakteristischen Kenngrößen auf:

| | |
|---|---|
| Acrylnitrilgehalt: | 35 Gew.% |
| Mooney-Viskosität (ML 1+4 @100°C): | 34 Mooney-Einheiten |
| Restfeuchte: | 1,8 Gew.% |
| M_{w}: | 240.000 g/mol |
| Mₙ: | 100.000 g/mol |
| PDI (M_{w} / Mₙ): | 2,4 |

Nachfolgend wird dieser Nitrilkautschuk mit NBR abgekürzt.

### Allgemeine Beschreibung der durchgeführten Metathese-Reaktionen:

Für den Metatheseabbau wurden jeweils 293,3 g Chlorbenzol (nachfolgend "MCB" genannt/Firma Aldrich) verwendet, das vor Einsatz destilliert und bei Raumtemperatur durch Durchleiten von Argon inertisiert wurde. Hierin wurden 40 g NBR während eines Zeitraums von 10 h bei Raumtemperatur gelöst. Zu der NBR-haltigen Lösung wurde jeweils 0,8 g (2 phr) 1-Hexen gegeben und zur Homogenisierung 30 min gerührt.

Die Durchführung der Metathesereaktionen erfolgte mit den in den nachfolgenden Tabellen genannten Mengen an Einsatzstoffen bei Raumtemperatur.

Die Ru-haltigen Katalysatoren wurden jeweils in 20 g MCB bei Raumtemperatur unter Argon gelöst. Die Zugabe der Katalysatorlösungen zu den NBR-Lösungen in MCB erfolgte sofort nach der Herstellung der Katalysatorlösungen. Nach den in den Tabellen angegebenen Reaktionszeiten wurden von den Reaktionslösungen jeweils ca. 5 ml entnommen und zur Abstoppung unmittelbar mit ca. 0,2 ml Ethylvinylether versetzt und anschließend mit 5 ml DMAc (*N,N*-Dimethylacetamid der Firma Aldrich) verdünnt. Von diesen Lösungen wurden jeweils 2 ml in ein GPC-Gläschen gegeben und mit DMAc auf 3 ml verdünnt. Vor Durchführung der GPC-Analyse wurden die Lösungen jeweils mittels eines 0,2µm-Spritzenfilters aus Teflon (Chromafil PTFE 0,2 µm; Firma Machery-Nagel) filtriert. Im Anschluss daran erfolgte die GPC-Analyse mit einem Gerät der Firma Fa. Waters (Mod. 510). Für die Analytik wurde eine Kombination von 4 Säulen der Polymer Laboratories verwendet: 1) PLgel 5µm Mixed-C, 300 x 7,5mm, 2) PLgel 5µm Mixed-C, 300 x 7,5mm, 3) PLgel 3µm Mixed-E, 300 x 7,5mm, und 4) PLgel 3µm Mixed-E, 300 x 7,5mm.

Die Kalibrierung der GPC-Säulen erfolgte mit linearem Poly(methylmethacrylat) der Firma Polymer Standards Services. Als Detektor wurde ein RI-Detektor der Firma Waters (Waters 410) verwendet. Die Analytik wurde mit einer Flussrate von 0,5 mL/min durchgeführt, wobei als Eluent DMAc bei 70°C verwendet wurde. Die Auswertung der GPC-Kurven erfolgte mit Software der Firma Millenium.

Mittels GPC-Analyse wurden folgende charakteristischen Kenngrößen sowohl für den NBR-Originalkautschuk (vor dem Abbau) als auch für die abgebauten Nitrilkautschuke bestimmt:
- M_{w} [kg/mol]:: Gewichtsmittel des Molekulargewichs
- Mₙ [kg/mol]:: Zahlenmittel der Molekulargewichts
- PDI:: Breite der Molekulargewichtsverteilung (M_{w}/Mₙ)

### Beispielserien 1-3:

### Aktivitätsvergleich des "Hoveyda-Katalysators" mit dem "Grubbs-II-Katalysator" in Gegenwart von 2 phr 1-Hexen

In den Beispielserien 1 und 2 wurde die Aktivität des "Hoveyda-Katalysators" mit der des "Grubbs-II-Katalysators" bei zwei Ruthenium-Gehalten (23,8 ppm und 161,4 ppm) verglichen. Diese Aktivitätsvergleiche wurden bei einer Dosierung von 2,0 phr 1-Hexen durchgeführt.

In Beispielserie 3 wurde der Metatheseabbau mit dem "Hoveyda-Katalysator" bei einer Rutheniumdosierung von 8,6 ppm und einer Dosierung von 2,0 phr 1-Hexen durchgeführt.

### Beispiel 1.1 (erfindungsgemäß)

### "Hoveyda-Katalysator" bei Dosierung von 161 ppm Ruthenium und 2,0 phr 1-Hexen

| **NBR** | **"Hoveyda-Katalysator" (MG = 626,14 g/mol)** | | | **1-Hexen** | | **Temperatur** |
|---|---|---|---|---|---|---|
| Menge | Menge | Menge | Ru | Menge | Menge | [°C] |
| [g] | [mg] | [phr] | [ppm] | [g] | [phr] | |
| 40 | 40 | 0,1 | 161,4 | 0,8 | 2,0 | 23 |

| **Analytische Daten** | **"Hoveyda-Katalysator"/Reaktionszeit [min.]** | | | | |
|---|---|---|---|---|---|
| | **0** | **30** | **60** | **185** | **425** |
| **M_{w} [kg/mol]** | 240 | 22 | 16 | 14 | 13 |
| **Mₙ [kg/mol]** | 100 | 14 | 12 | 10 | 10 |
| **PDI** | 2,4 | 1,57 | 1,33 | 1,40 | 1,30 |

Die in Beispiel 1.1 erhaltenen abgebauten Nitrilkautschuke waren gelfrei.

### Beispiel 1.2 (Vergleich)

### "Grubbs-II-Katalysator" bei Dosierung von 161ppm Ruthenium und 2,0 phr 1-Hexen

| **NBR** | **"Grubbs-II-Katalysator"** | | | **1-Hexen** | | **Temperatur** |
|---|---|---|---|---|---|---|
| Menge | Menge | Menge | Ru | [g] | [phr] | [°C] |
| [g] | [mg] | [phr] | [ppm] | | | |
| 40 | 54,2 | 0,14 | 161,4 | 0,8 | 2,0 | 23 |

| **Analytische Daten** | **"Grubbs-II-Katalysator" / Reaktionszeit** | | | | |
|---|---|---|---|---|---|
| | **[min.]** | | | | |
| | **0** | **30** | **60** | **185** | **425** |
| **M_{w} [kg/mol]** | 240 | 86 | 65 | 35 | 28 |
| **Mₙ [kg/mol]** | 100 | 40 | 35 | 19 | 17 |
| **PDI** | 2,4 | 2,13 | 1,87 | 1,88 | 1,68 |

Der Vergleich der Abnahme der Molgewichte M_{w} und Mₙ in den Beispielen 1.1 und 1.2 zeigt, dass bei einer Ruthenium-Dosierung von 161 ppm die Aktivität des "Hoveyda-Katalysators" deutlich höher als die des "Grubbs-II-Katalysators" ist. Mit dem "Hoveyda-Katalysator" ist die Metathesereaktion nach ca. 30 min beendet, während mit dem "Grubbs-II-Katalysator" der Metatheseabbau nach 425 min Reaktionszeit noch nicht abgeschlossen ist. Bei jeweils gleichen Reaktionszeiten werden mit dem "Hoveyda-Katalysator" niedrigere Molmassen als mit dem "Grubbs-II-Katalysator" erhalten.

### Beispiel 2.1 (erfindungsgemäß)

### "Hoveyda-Katalysator" bei Dosierung von 23,8 ppm Ruthenium und 2,0 phr 1-Hexen

| **NBR** | **"Hoveyda-Katalysator"** **(MG = 626,14 g/mol)** | | | **1-Hexen** | | **Temperatur** |
|---|---|---|---|---|---|---|
| Menge | Menge | Menge | Ru | Menge | Menge | [°C] |
| [g] | [mg] | [phr] | [ppm] | [g] | [phr] | |
| 40 | 5,9 | 0,014 | 23,8 | 0,8 | 2,0 | 23 |

| **Analytische Daten** | **"Hoveyda-Katalysator" / Reaktionszeit** | | | | |
|---|---|---|---|---|---|
| | **[min.]** | | | | |
| | **0** | **30** | **60** | **185** | **425** |
| **M_{w} [kg/mol]** | 240 | 79 | 77 | 72 | 70 |
| **Mₙ [kg/mol]** | 100 | 55 | 40 | 40 | 39 |
| **PDI** | 2,4 | 1,44 | 1,90 | 1,82 | 1,77 |

Die in der Versuchsserie 2.1 mit dem "Hoveyda-Katalysator" abgebauten Nitrilkautschuke waren gelfrei.

### Beispiel 2.2 (Vergleich)

### "Grubbs-II-Katalysator" bei Dosierung von 23,8 ppm Ruthenium und 2,0 phr 1-Hexen

| **NBR** | **"Grubbs-II-Katatysator"** | | | **1-Hexen** | | **Temperatur** |
|---|---|---|---|---|---|---|
| Menge | Menge | Menge | Ru | [g] | [phr] | [°C] |
| [g] | [mg] | [phr] | [ppm] | | | |
| 40 | 8 | 0,02 | 23,8 | 0,8 | 2,0 | 23 |

| **Analytische Daten** | **"Grubbs-II-Katalysator" / Reaktionszeit** | | | | | |
|---|---|---|---|---|---|---|
| | **[min.]** | | | | | |
| | **0** | **30** | **60** | **185** | **425** | **1325** |
| **M_{w} [kg/mol]** | 240 | 190 | 180 | 150 | 125 | 118 |
| **Mₙ [kg/mol]** | 100 | 67 | 63 | 59 | 62 | 51 |
| **PDI** | 2,4 | 2,83 | 2,86 | 2,54 | 2,02 | 2,31 |

Der Vergleich der Molgewichte M_{w} und Mₙ in den Versuchsserien 2.1 und 2.2 zeigt, dass bei identischen Dosierungen von Ruthenium (24 ppm) und von 1-Hexen (2 phr) die Aktivität des Hoveyda-Katalysators (V) deutlich höher als die des Grubbs-II-Katalysators ist. Bei jeweils gleichen Reaktionszeiten wurden mit dem Hoveyda-Katalysator (V) niedrigere Molmassen als mit dem Grubbs-II-Katalystor erhalten.

### Beispiel 3 (erfindungsgemäß)

### "Hoveyda-Katalysator" bei Dosierung von 8,6 ppm Ruthenium und 2,0 phr 1-Hexen

| **NBR** | **"Hoveyda-Katalysator"** | | | **1-Hexen** | | **Temperatur** |
|---|---|---|---|---|---|---|
| Menge | Menge | Menge | Ru | [g] | [phr] | [°C] |
| [g] | [mg] | [phr] | [ppm] | | | |
| 40 | 2,12 | 0,0053 | 8,56 | 0,8 | 2,0 | 23 |

| **Analytische Daten** | **"Hoveyda-Katalysator" / Reaktionszeit** | | | | | |
|---|---|---|---|---|---|---|
| | **[min.]** | | | | | |
| | **0** | **30** | **60** | **185** | **425** | **1325** |
| **M_{w} [kg/mol]** | 240 | 154 | 136 | 121 | 100 | 86 |
| **Mₙ [kg/mol]** | 100 | 69 | 60 | 54 | 48 | 45 |
| **PDI** | 2,4 | 2,23 | 2,27 | 2,24 | 2,08 | 1,91 |

Bei einem Vergleich des Beispiels 3 ("Hoveyda-Katalysator"/ 8,6 ppm Ruthenium) mit 2.2 ("Grubbs-II-Katalysator"/ 23,8 ppm Ruthenium) zeigte sich, dass bei Einsatz des "Hoveyda-Katalysator" trotz signifikant niedrigerer Rutheniummenge die mittleren Molekulargewichte M_{w} und Mₙ bei gleichen Reaktionszeiten niedriger sind als bei Verwendung des "Grubbs-II-Katalysators".

Auch die in dieser Beispielserie 3 mit dem "Hoveyda-Katalysator" abgebauten Nitrilkautschuke waren gelfrei.

### Beispielserien 4 und 5:

### Aktivitätsvergleich zwischen dem "Grela-Katalysator" und dem "Grubbs-II-Katalysator" in Gegenwart von 2 phr 1-Hexen

In den Beispielserien 4 und 5 wurden die Aktivität des "Grela-Katalysators" mit der des "Grubbs-II-Katalysators" bei zwei Ruthenium-Gehalten (23-24 ppm und 60 ppm) verglichen. Die Aktivitätsvergleiche wurden jeweils unter Verwendung von 2,0 phr 1-Hexen durchgeführt.

### Beispiel 4.1 (erfindungsgemäß)

### "Grela-Katalysator" bei Dosierung von 22,9 ppm Ruthenium und 2 phr 1-Hexen

| **NBR** | **"Grela-Katalysator"** **(MG: 671,13 g/mol)** | | | **1-Hexen** | | **Temperatur** |
|---|---|---|---|---|---|---|
| Menge | Menge | Menge | Ru | Menge | Menge | [°C] |
| [g] | [mg] | [phr] | [ppm] | [g] | [phr] | |
| 40 | 6,1 | 0,015 | 22,9 | 0,8 | 2,0 | 23 |

| **Analytische Daten** | **"Grela-Katalysator" / Reaktionszeit** | | | | |
|---|---|---|---|---|---|
| | **[min.]** | | | | |
| | **0** | **30** | **60** | **185** | **425** |
| **M_{w} [kg/mol]** | 240 | 109 | 98 | - | 86 |
| **Mₙ [kg/mol]** | 100 | 61 | 50 | - | 44 |
| **PDI** | 2,4 | 1,79 | 1,96 | - | 1,95 |

### Beispiel 4.2 (Vergleich)

### "Grubbs-II-Katalysator" bei Dosierung von 23,8 ppm Ruthenium und 2 phr 1-Hexen

| **NBR** | **"Grubbs-II-Katalysator"** | | | **1-Hexen** | | **Temperatur** |
|---|---|---|---|---|---|---|
| Menge | Menge | Menge | Ru | Menge | Menge | [°C] |
| [g] | [mg] | [phr] | [ppm] | [g] | [phr] | |
| 40 | 8,0 | 0,02 | 23,8 | 0,8 | 2,0 | 23 |

| **Analytische Daten** | **"Grubbs-II-Katalysator" / Reaktionszeit** | | | | |
|---|---|---|---|---|---|
| | **[min.]** | | | | |
| | **0** | **30** | **60** | **185** | **425** |
| **M_{w} [kg/mol]** | 240 | 190 | 180 | 150 | 125 |
| **Mₙ [kg/mol]** | 100 | 67 | 63 | 59 | 62 |
| **PDI** | 2,4 | 2,83 | 2,86 | 2,54 | 2,02 |

Der Vergleich der mittleren Molekulargewichte M_{w} und Mₙ in den Versuchsserien 4.1 und 4.2 zeigt, dass bei identischen Dosierungen von Ruthenium (22,9/23,8 ppm) und von 1-Hexen (2 phr) die Aktivität des "Grela-Katalysators" deutlich höher als die des "Grubbs-II-Katalysators" ist. Bei jeweils gleichen Reaktionszeiten wurden mit dem "Grela-Katalysator" niedrigere Molekulargewichte als mit dem "Grubbs-II-Katalysator" erhalten.

Die in der Versuchsserie 4.1 mit dem "Grela-Katalysator" abgebauten Nitrilkautschuke waren gelfrei.

### Beispiel 5.1 (erfindungsgemäß)

### "Grela-Katalysator" bei Dosierung von 59,5 ppm Ruthenium und 2,0 phr 1-Hexen

| **NBR** | **"Grela-Katalysator"** **(MG: 671,13 g/mol)** | | | **1-Hexen** | | **Temperatur** |
|---|---|---|---|---|---|---|
| Menge | Menge | Menge | Ru | Menge | Menge | [°C] |
| [g] | [mg] | [phr] | [ppm] | [g] | [phr] | |
| 40 | 15,8 | 0,04 | 59,5 | 0,8 | 2,0 | 23 |

| **Analytische Daten** | **"Grela-Katalysator" / Reaktionszeit** | | | | |
|---|---|---|---|---|---|
| | **[min.]** | | | | |
| | **0** | **30** | **60** | **185** | **425** |
| **M_{w} [kg/mol]** | 240 | 37 | 35 | 31 | 31 |
| **Mₙ [kg/mol]** | 100 | 23 | 22 | 20 | 20 |
| **PDI** | 2,4 | 1,61 | 1,59 | 1,50 | 1,55 |

### Beispiel 5.2 (erfindungsgemäß)

### "Grubbs-II-Katalysator" bei Dosierung von 59,6 ppm Ruthenium und 2,0 phr 1-Hexen

| **NBR** | **"Grubbs-II-Katalysator"** | | | **1-Hexen** | | **Temperatur** |
|---|---|---|---|---|---|---|
| Menge | Menge | Menge | Ru | Menge | Menge | [°C] |
| [g] | [mg] | [phr] | [ppm] | [g] | [phr] | |
| 40 | 20,0 | 0,05 | 59,6 | 0,8 | 2,0 | 23 |

| **Analytische Daten** | **"Grubbs-II-Katalysator" / Reaktionszeit** | | | | |
|---|---|---|---|---|---|
| | **[min.]** | | | | |
| | **0** | **30** | **60** | **185** | **425** |
| **M_{w} [kg/mol]** | 240 | 185 | 165 | 77 | 60 |
| **Mₙ [kg/mol]** | 100 | 84 | 78 | 38 | 35 |
| **PDI** | 2,4 | 2,13 | 2,11 | 2,03 | 1,71 |

Der Vergleich der mittleren Molekulargewichte M_{w} und Mₙ in den Versuchsserien 5.1 und 5.2 zeigt, dass bei identischen Dosierungen von Ruthenium (60 ppm) und von 1-Hexen (2 phr) die Aktivität des "Grela-Katalysators" deutlich höher als die des "Grubbs-II-Katalysators" ist. Mit dem "Grela-Katalysator" wurden nach ca. 185 min Endwerte für M_{w} und Mₙ erreicht, während mit dem "Grubbs-II-Katalysator" der Metatheseabbau nach 425 min Reaktionszeit noch nicht beendet war. Bei jeweils gleichen Reaktionszeiten wurden mit dem "Grela-Katalysator" niedrigere Molekulargewichte als mit dem "Grubbs-II-Katalysator" erhalten.

Die in der Versuchsserie 5.1 mit dem "Grela-Katalysator" abgebauten Nitrilkautschuke waren gelfrei.

### Beispiel 6:

### Aktivitätsvergleich zwischen dem "Hoveyda-Katalysator" und dem "Grubbs-II-Katalysator" ohne Zusatz von 1-Hexen

In den Versuchsserien 6.1 und 6.2 wurde die Aktivität des "Hoveyda-Katalysators" mit der des "Grubbs-II-Katalysators" bei einem Ruthenium-Gehalt von 60 ppm verglichen. Der Aktivitätsvergleich wurde ohne Verwendung von 1-Hexen durchgeführt.

### Beispiel 6.1 (erfindungsgemäß)

### "Hoveyda-Katalysator" bei Dosierung von 59,3 ppm Ruthenium ohne Zusatz von 1-Hexen

| **NBR** | **"Hoveyda-Katalysator"** | | | **1-Hexen** | | **Temperatur** |
|---|---|---|---|---|---|---|
| Menge | Menge | Menge | Ru | Menge | Menge | [°C] |
| [g] | [mg] | [phr] | [ppm] | [g] | [phr] | |
| 40 | 14,7 | 0,0368 | 59,3 | 0 | 0 | 23 |

| **Analytische Daten** | **"Hoveyda-Katalysator"/ Reaktionszeit** | | | | |
|---|---|---|---|---|---|
| | **[min.]** | | | | |
| | **0** | **30** | **60** | **185** | **425** |
| **M_{w} [kg/mol]** | 240 | 149 | 143 | 132 | 108 |
| **Mₙ [kg/mol]** | 100 | 66 | 63 | 62 | 54 |
| **PDI** | 2,4 | 2,26 | 2,27 | 2,13 | 2,00 |

### Beispiel 6.2 (Vergleich)

### "Grubbs-II-Katalysator" bei Dosierung von 59,6 ppm Ruthenium ohne Zusatz von 1-Hexen

| **NBR** | **"Grubbs-II-Katalysator"** | | | **1-Hexen** | | **Temperatur** |
|---|---|---|---|---|---|---|
| Menge | Menge | Menge | Ru | Menge | Menge | [°C] |
| [g] | [mg] | [phr] | [ppm] | [g] | [phr] | |
| 40 | 20,0 | 0,05 | 59,6 | 0 | 0 | 23 |

| **Analytische Daten** | **"Grubbs-II-Katalysator"/Reaktionszeit** | | | | |
|---|---|---|---|---|---|
| | **[min.]** | | | | |
| | **0** | **30** | **60** | **185** | **425** |
| **M_{w} [kg/mol]** | 240 | 206 | - | 173 | 158 |
| **Mₙ [kg/mol]** | 100 | 92 | - | 74 | 75 |
| **PDI** | 2,4 | 2,24 | - | 2,34 | 2,11 |

Der Vergleich der mittleren Molekulargewichte M_{w} und Mₙ in den Beispielen 6.1 und 6.2 zeigt, dass bei vergleichbarer Ruthenium-Dosierung (ca. 60 ppm) ohne Zugabe von 1-Hexen die Aktivität des "Hoveyda-Katalysators" höher als die des "Grubbs-II-Katalysators" ist. Bei Verwendung des "Hoveyda-Katalysators" sind die mittleren Molekulargewichte M_{w} und Mₙ bei gleichen Reaktionszeiten niedriger als bei Einsatz des "Grubbs-II-Katalysators",

Die in Beispiel 6.1 mit dem "Hoveyda-Katalysator" ohne Verwendung von 1-Hexen abgebauten Nitrilkautschuke waren gelfrei.

## Patentansprüche

1. Verwendung von Katalysatoren der allgemeinen Formel (I) zur Metathese von Nitrilkautschuken, 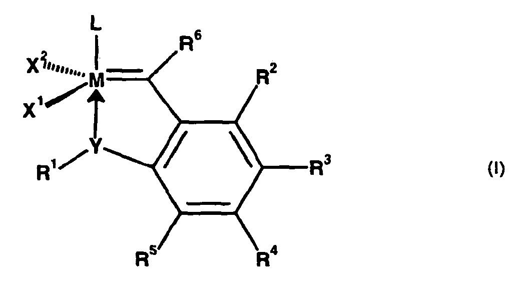 worin
M Ruthenium oder Osmium bedeutet,
Y Sauerstoff (O), Schwefel (S), einen Rest N-R¹ oder einen Rest P-R¹ bedeutet,
X¹ und X² gleiche oder verschiedene Liganden darstellen,
R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Aryl- thio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
R², R³, R⁴, R⁵ gleich oder verschieden sind und Wasserstoff, organische oder anorganische Reste darstellen,
R⁶ Wasserstoff, einen Alkyl-, Alkenyl-, Alkinyl- oder einen Aryl-Rest bedeutet und
L ein Ligand ist.

2. Verwendung gemäß Anspruch 1, wobei L in der allgemeinen Formel (I) für einen P(R⁷)₃ Rest steht, worin R⁷ unabhängig voneinander C₁-C₆-Alkyl, C₃-C₈-Cycloalkyl oder Aryl bedeuten, oder aber für einen gegebenenfalls substituierten Imidazolidinrest ("Im").

3. Verwendung gemäß Anspruch 2, wobei der Imidazolidinrest (Im) eine Struktur der allgemeinen Formeln (IIa) oder (IIb) aufweist, 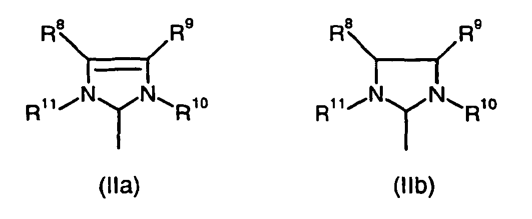 worin
R⁸, R⁹, R¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀- Alkinyl, C₆-C₂₄-Aryl, C₁-C₂₀-Carboxylat, C₁-C₁₀-Alkoxy, C₂-C₂₀- Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₁₀-Alkylsulfonyl, C₁-C₂₀- Alkylsulfonat, C₆-C₂₀-Arylsulfonat oder C₁-C₂₀-Alkylsulfinyl bedeuten.

4. Verwendung gemäß Anspruch 3, wobei R¹⁰ und R¹¹ im Imidazolidinrest (Im) gleich oder verschieden sind und geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat oder C₆-C₁₀-Arylsulfonat, besonders bevorzugt p-Toluolsulfonat, bedeuten.

5. Verwendung gemäß Anspruch 3, wobei der Imidazolidinrest (Im) die nachfolgenden Strukturen (IIIa), (IIIb), (IIIc), (IIId), (IIIe) oder (IIIf) besitzt 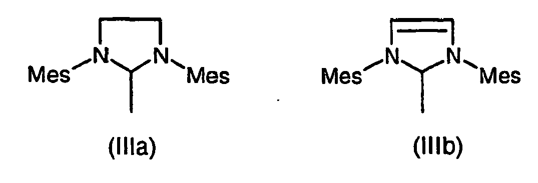 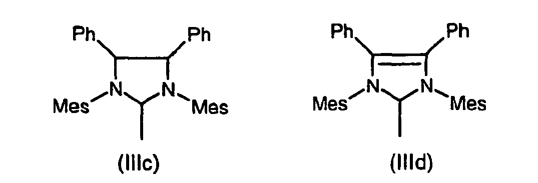 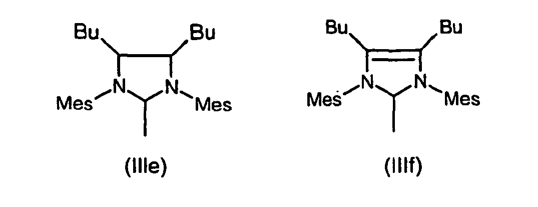 wobei Mes jeweils für einen 2,4,6-Trimethylphenyl-Rest steht.

6. Verwendung gemäß einem oder mehreren der Ansprüche 1 bis 5, wobei X¹ und X² in der allgemeinen Formel (I) gleich oder verschieden sind und Wasserstoff, Halogen, Pseudohalogen, geradkettiges oder verzweigtes C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl bedeuten.

7. Verwendung gemäß Anspruch 6, wobei X¹ und X² in der allgemeinen Formel (I) gleich oder verschieden sind und Halogen, bevorzugt Fluor, Chlor oder Brom, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat bedeuten.

8. Verwendung gemäß Anspruch 6, wobei X¹ und X² in der allgemeinen Formel (I) identisch sind und Halogen, insbesondere Chlor, CF₃COO, CH₃COO, CFH₂COO, (CH₃)₃CO, (CF₃h(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat) bedeuten.

9. Verwendung gemäß einem oder mehreren der Ansprüche 1 bis 8, wobei der Rest R¹ in der allgemeinen Formel (I) für einen C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfmyl Rest steht, der optional durch ein oder mehrere Alkyl-, Halogen-, Alkoxy-, Aryl- oder Heteroaryl-Reste substituiert sein können.

10. Verwendung gemäß einem oder mehreren der Ansprüche 1 bis 9, wobei die Reste R², R³, R¹ und R⁵ in der allgemeinen Formel (I) gleich oder verschieden sind und Wasserstoff, Halogen, bevorzugt Chlor oder Brom, Nitro, CF₃, C₁-C₃₀-Alkyl, C₃-C₃₀-Cyclcalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkyamino-, C₁-C₂₀-Alkylthio, C₆-C₂₄-Arylthio, C₁-C₂₀-Alkylsulfonyl oder C₁-C₂₀-Alkylsulfinyl Reste bedeuten, die alle jeweils optional durch ein oder mehrere C₁-C₃₀-Alkyl-, C₁-C₂₀-Alkoxy-, Halogen-, C₆-C₂₄-Aryl- oder Heteroaryl-Reste substituiert sein können.

11. Verwendung gemäß einem oder mehreren der Ansprüche 1 bis 9, wobei der Rest R⁶ Wasserstoff, einen C₁-C₃₀-Alkyl, einen C₂-C₂₀-Alkenyl-, einen C₂-C₂₀-Alkinyl oder einen C₆-C₂₄-Aryl-Rest bedeutet.

12. Verwendung gemäß Anspruch 1, wobei ein Katalysator gemäß der allgemeinen Formel (IV) 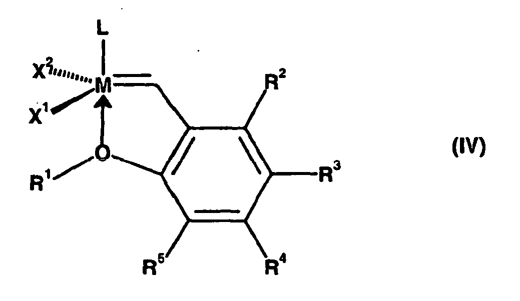 eingesetzt wird, worin
M, L, X¹, X², R¹, R², R³, R⁴ und R⁵ die für die allgemeine Formel (I) genannten Bedeutungen besitzen.

13. Verwendung gemäß Anspruch 12, wobei in der allgemeinen Formel (IV)
M Ruthenium bedeutet,
X¹ und X² gleichzeitig Chlor bedeuten,
R¹ für einen Isopropyl-Rest steht,
R², R³, R⁴, R⁵ alle Wasserstoff bedeuten und
L einen gegebenenfalls substituierten Imidazolidin-Rest der Formeln (IIa) oder (IIb) darstellt, 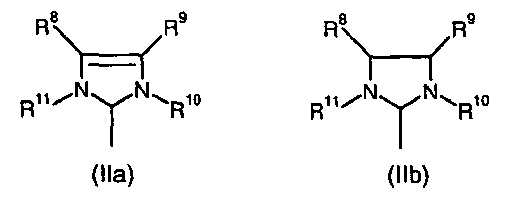
worin
R⁸, R⁹, R¹⁰, R¹¹ gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀- Alkinyl, C₆-C₂₄-Aryl, C₁-C₂₀-Carboxylat, C₁-C₂₀-Alkoxy, C₂-C₂₀- Alkenyloxy, C₂-C₂₀-Alkinyloxy, C₆-C₂₄-Aryloxy, C₂-C₂₀- Alkoxycarbonyl, C₁-C₂₀-Allcylthio, C₆-C₂₄-Arylthio, C₁-C₂₀- Alkylsulfonyl, C₁-C₂₀-Alkylsulfonat, C₆-C₂₄-Arylsulfonat oder C₁-C₂₀- Alkylsulfinyl bedeuten.

14. Verwendung gemäß Anspruch 1, wobei ein Katalysator der folgenden Formel (V), (VI), (VII), (VIII), (IX), (X), (XI), (XII) oder (IXX) verwendet wird, worin Mes jeweils einen 2,4,6-Trimethylphenyl-Rest bedeutet.

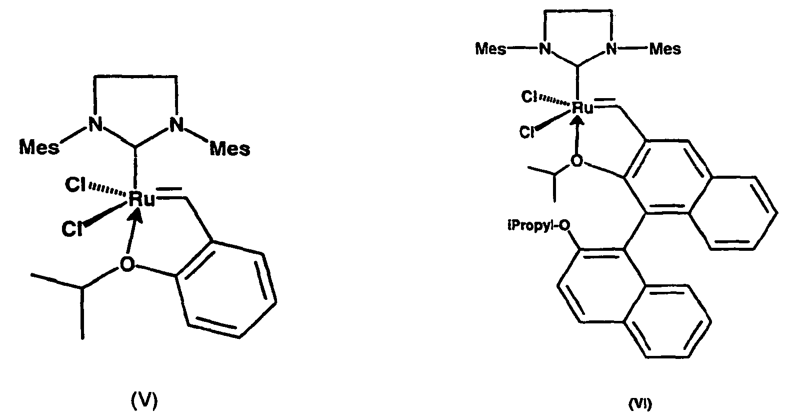

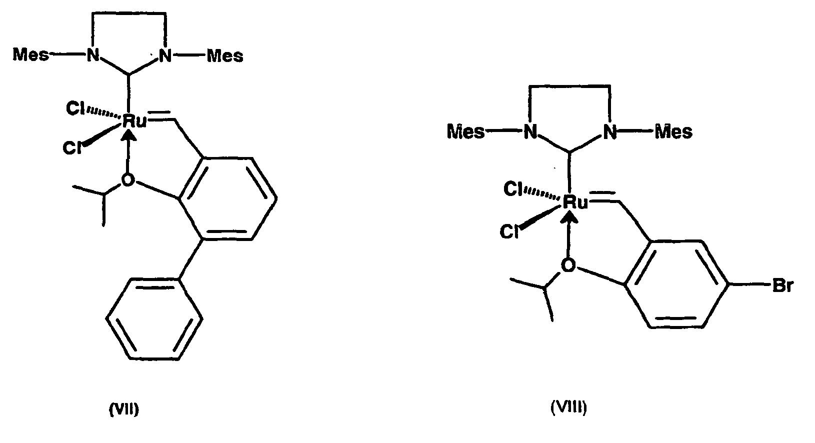

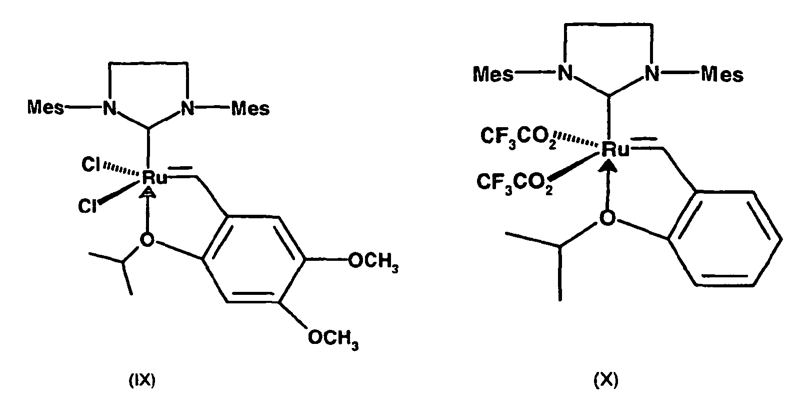

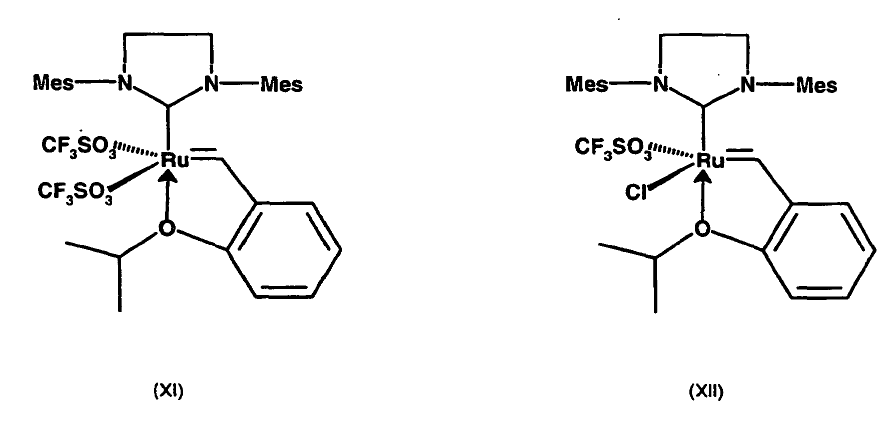

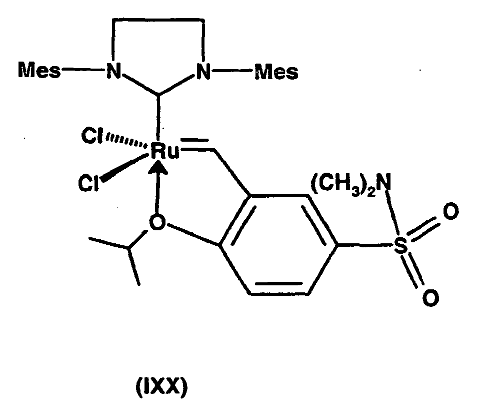

15. Verwendung gemäß Anspruch 1, wobei Katalysatoren gemäß der allgemeinen Formel (XIII) eingesetzt werden, 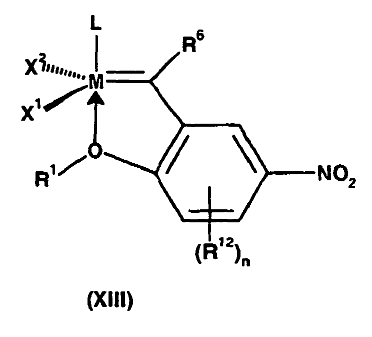 worin
M, L, X¹, X², R¹ und R⁶ die für die allgemeine Formel (I) genannten Bedeutungen haben,
R¹² gleich oder verschieden sind und die für die Reste R², R³, R⁴ und R⁵ in der allgemeinen Formel (I) genannten Bedeutungen, ausgenommen Wasserstoff, besitzen und
n gleich 0, 1, 2 oder 3 ist.

16. Verwendung gemäß Anspruch 1, wobei ein Katalysator der folgenden Formel (XIV) oder (XV) eingesetzt wird,

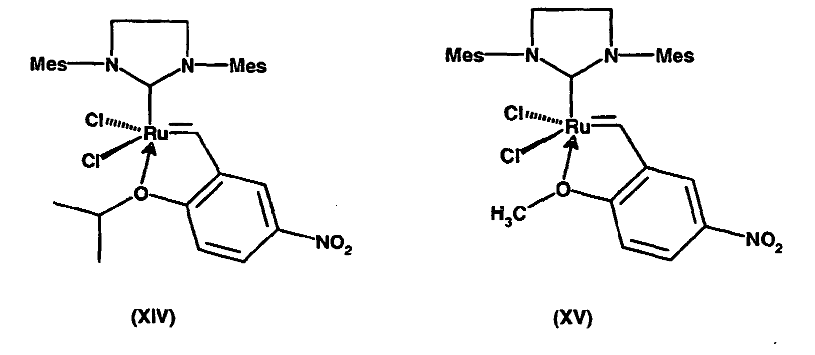

17. Verwendung gemäß Anspruch 1, wobei ein Katalysator der allgemeinen Formel (XVI) eingesetzt wird, 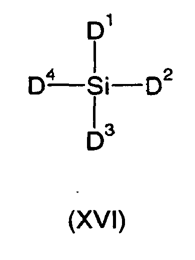 worin D¹, D², D³ und D⁴ jeweils eine Struktur der allgemeinen Formel (XVII) aufweisen, die über die Methylengruppe an das Silicium der Formel (XVI) angebunden ist und 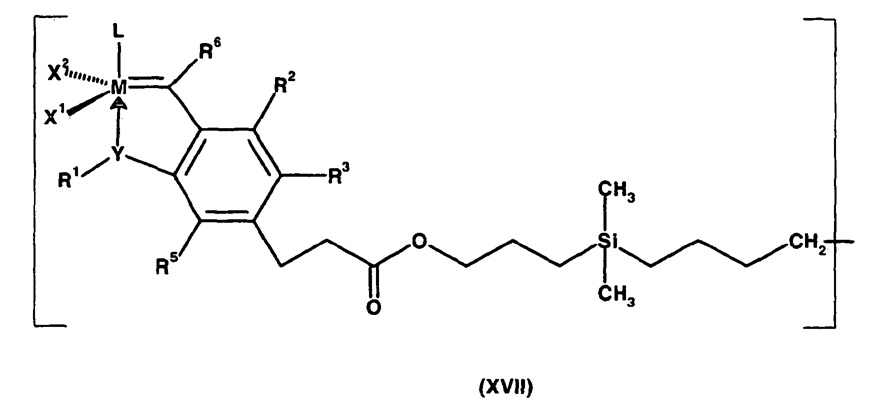 worin
M, L, X¹, X¹, R², R¹, R², R³, R⁵ und R⁶ die für die allgemeine Formel (I) genannten Bedeutungen besitzen.

18. Verwendung gemäß Anspruch 1, wobei ein Katalysator der allgemeinen Formel (XVIII) eingesetzt wird, 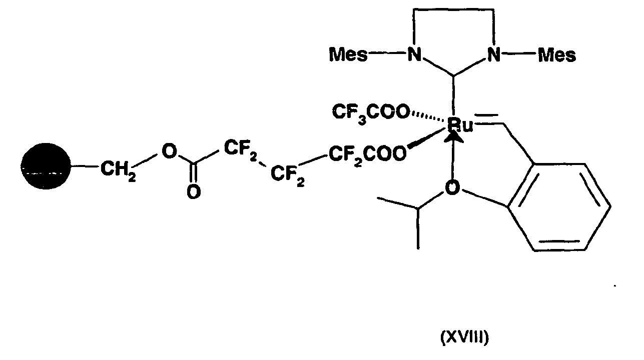
worin das Symbol 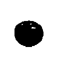 für einen Träger, bevorzugt für ein Poly(styroldivinylbenzol)-Copolymer (PS-DVB) steht.

19. Verwendung gemäß einem oder mehreren der Ansprüche 1 bis 18, wobei die Menge an eingesetztem Katalysator 5 bis 1.000 ppm Edelmetall beträgt, bevorzugt 5 bis 500 ppm, insbesondere 5 bis 250 ppm, bezogen auf den eingesetzten Nitrilkautschuk.

20. Verwendung gemäß einem oder mehreren der Ansprüche 1 bis 19, wobei die Metathese ohne oder in Gegenwart eines Co-Olefins durchgeführt wird, bei dem es sich bevorzugt um ein geradkettiges oder verzweigtes C₂-C₁₆-Olefin, besonders bevorzugt um Ethylen, Propylen, Isobuten, Styrol, 1-Hexen oder 1-Octen handelt.

21. Verwendung gemäß einem oder mehreren der Ansprüche 1 bis 20, wobei als Nitrilkautschuke Co- oder Terpolymere eingesetzt werden, welche Wiederholungseinheiten mindestens eines konjugierten Diens, mindestens eines α,β-ungesättigten Nitrils und gegebenenfalls einer oder mehrerer weiterer copolymerisierbarer Monomere enthalten.

22. Verwendung gemäß einem oder mehreren der Ansprüche 1 bis 21, wobei die eingesetzten Nitrilkautschuke eine Mooney-Viskosität (ML 1+4 bei 100°C) im Bereich von 30 bis 70, bevorzugt von 30 bis 50 besitzen.

23. Verfahren zur Herstellung hydrierter Nitrilkautschuke, **dadurch gekennzeichnet, dass** ein Nitrilkautschuk einem Metathese-Abbau in Gegenwart eines Katalysators der allgemeinen Formel (I) unterworfen wird und anschließend der erhaltene abgebaute Nitrilkautschuk einer Hydrierung, bevorzugt in situ, unterzogen wird.

## Claims

1. Use of catalysts of the general formula (I) for the metathesis of nitrile rubbers, 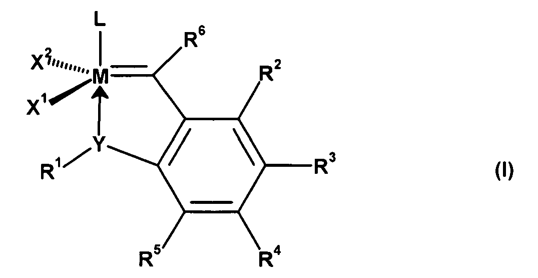 where
M is ruthenium or osmium,
Y is oxygen (O), sulphur (S), an N-R¹ radical or a P-R¹ radical,
X¹ and X² are identical or different ligands,
R¹ is an alkyl, cycloalkyl, alkenyl, alkynyl, aryl, alkoxy, alkenyloxy, alkynyloxy, aryloxy, alkoxycarbonyl, alkylamino, alkylthio, arylthio, alkylsulphonyl or alkylsulphinyl radical, each of which may optionally be substituted by one or more alkyl, halogen, alkoxy, aryl or heteroaryl radicals,
R², R³, R⁴, R⁵ are identical or different and are each hydrogen, organic or inorganic radicals,
R⁶ is hydrogen or an alkyl, alkenyl, alkynyl or aryl radical and
L is a ligand.

2. Use according to Claim 1, wherein L in the general formula (I) is a P(R⁷)₃ radical, where the radicals R⁷ are each, independently of one another, C₁-C₆-alkyl, C₃-C₈-cycloalkyl or aryl or a substituted or unsubstituted imidazolidine radical ("Im").

3. Use according to Claim 2, wherein the imidazolidine radical (Im) has a structure of the general formula (IIa) or (IIb), 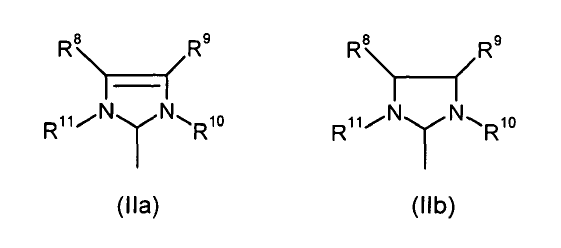 where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄- aryl, C₁-C₂₀-carboxylate, C₁-C₂₀-alkoxy, C₂-C₂₀-alkenyloxy, C₂-C₂₀- alkynyloxy, C₆-C₂₀-aryloxy, C₂-C₂₀-alkoxycarbonyl, C₁-C₂₀-alkylthio, C₆- C₂₀-arylthio, C₁-C₂₀-alkylsulphonyl, C₁-C₂₀-alkylsulphonate, C₆-C₂₀- arylsulphonate or C₁-C₂₀-alkylsulphinyl.

4. Use according to Claim 3, wherein R¹⁰ and R¹¹ in the imidazolidine radical (Im) are identical or different and are each straight-chain or branched C₁-C₁₀-alkyl, particularly preferably i-propyl or neopentyl, C₃-C₁₀-cycloalkyl, preferably adamantyl, C₆-C₂₄-aryl, particularly preferably phenyl, C₁-C₁₀-alkylsulphonate, particularly preferably methanesulphonate, or C₆-C₁₀-arylsulphonate, particularly preferably p-toluenesulphonate.

5. Use according to Claim 3, wherein the imidazolidine radical (Im) has the structure (IIIa), (IIIb), (IIIc), (IIId), (IIIe) or (IIIf), 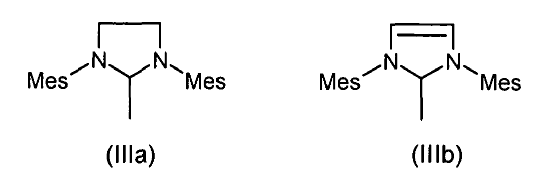 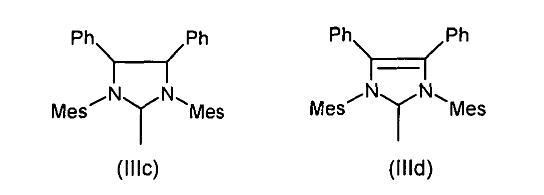 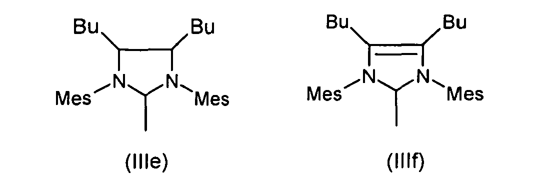 where Mes is in each case a 2,4,6-trimethylphenyl radical.

6. Use according to one or more of Claims 1 to 5, wherein X¹ and X² in the general formula (I) are identical or different and are each hydrogen, halogen, pseudohalogen, straight-chain or branched C₁-C₃₀-alkyl, C₆-C₂₄-aryl, C₁-C₂₀-alkoxy, C₆-C₂₄-aryloxy, C₃-C₂₀-alkyldiketonate, C₆-C₂₄-aryldiketonate, C₁-C₂₀-carboxylate, C₁-C₂₀-alkylsulphonate, C₆-C₂₄-arylsulphonate, C₁-C₂₀-alkylthiol, C₆-C₂₄-arylthiol, C₁-C₂₀-alkylsulphonyl or C₁-C₂₀-alkylsulphinyl.

7. Use according to Claim 6, wherein X¹ and X² in the general formula (I) are identical or different and are each halogen, preferably fluorine, chlorine or bromine, benzoate, C₁-C₅-carboxylate, C₁-C₅-alkyl, phenoxy, C₁-C₅-alkoxy, C₁-C₅-alkylthiol, C₆-C₂₄-arylthiol, C₆-C₂₄-aryl or C₁-C₅-alkylsulphonate.

8. Use according to Claim 6, wherein X¹ and X² in the general formula (I) are identical and are each halogen, in particular chlorine, CF₃COO, CH₃COO, CFH₂COO, (CH₃)₃CO, (CF₃)₂(CH₃)CO, (CF₃)(CH₃)₂CO, PhO (phenoxy), MeO (methoxy), EtO (ethoxy), tosylate (p-CH₃-C₆H₄-SO₃), mesylate (2,4,6-trimethylphenyl) or CF₃SO₃ (trifluoromethanesulphonate).

9. Use according to one or more of Claims 1 to 8, wherein the radical R¹ in the general formula (I) is a C₁-C₃₀-alkyl, C₃-C₂₀-cycloalkyl, C₂-C₂₀-alkenyl, C₂-C₂₀-alkynyl, C₆-C₂₄-aryl, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylamino, C₁-C₂₀-alkylthio, C₆-C₂₄-arylthio, C₁-C₂₀-alkylsulphonyl or C₁-C₂₀-alkylsulphinyl radical, each of which may optionally be substituted by one or more alkyl, halogen, alkoxy, aryl or heteroaryl radicals.

10. Use according to one or more of Claims 1 to 9, wherein the radicals R², R³, R⁴ and R⁵ in the general formula (I) are identical or different and are each hydrogen, halogen, preferably chlorine or bromine, nitro, CF₃ or a C₁-C₃₀-alkyl, C₃-C₃₀-cycloalkyl, C₂-C₂₀-alkenyl, C₂-C₂₀-alkynyl, C₆-C₂₄-aryl, C₁-C₂₀-alkoxy, C₂-C₂₀-alkenyloxy, C₂-C₂₀-alkynyloxy, C₆-C₂₄-aryloxy, C₂-C₂₀-alkoxycarbonyl, C₁-C₂₀-alkylamino, C₁-C₂₀-alkylthio, C₆-C₂₄-arylthio, C₁-C₂₀-alkylsulphonyl or C₁-C₂₀-alkylsulphinyl radical, each of which may optionally be substituted by one or more C₁-C₃₀-alkyl, C₁-C₂₀-alkoxy, halogen, C₆-C₂₄-aryl or heteroaryl radicals.

11. Use according to one or more of Claims I to 9, wherein the radical R⁶ is hydrogen, a C₁-C₃₀-alkyl radical, a C₂-C₂₀-alkenyl radical, a C₂-C₂₀-alkynyl radical or a C₆-C₂₄-aryl radical.

12. Use according to Claim 1, wherein a catalyst of the general formula (IV) 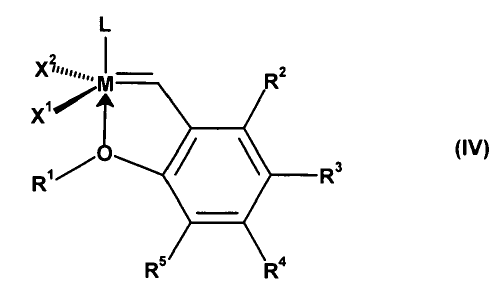 where
M, L, X¹, X², R¹, R², R³, R⁴ and R⁵ have the meanings given for the general formula (I), is used.

13. Use according to Claim 12, wherein, in the general formula (IV),
M is ruthenium,
X¹ and X² are both chlorine,
R¹ is an isopropyl radical,
R², R³, R⁴, R⁵ are all hydrogen and
L is a substituted or unsubstituted imidazolidine radical of the formula (IIa) or (IIb), 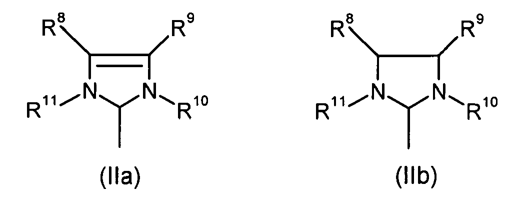
where
R⁸, R⁹, R¹⁰, R¹¹ are identical or different and are each hydrogen, straight-chain or branched C₁-C₃₀-alkyl, C₃-C₂₀-cycloalkyl, C₂-C₂₀-alkenyl, C₂-C₂₀-alkynyl, C₆-C₂₄- aryl, C₁-C₂₀-carboxylate, C₁-C₂₀-alkoxy, C₂-C₂₀-alkenyloxy, C₂-C₂₀- alkynyloxy, C₆-C₂₄-aryloxy, C₂-C₂₀-alkoxycarbonyl, C₁-C₂₀-alkylthio, C₆- C₂₄-arylthio, C₁-C₂₀-alkylsulphonyl, C₁-C₂₀-alkylsulphonate, C₆-C₂₄- arylsulphonate or C₁-C₂₀-alkylsulphinyl.

14. Use according to Claim 1, wherein a catalyst of the formula (V), (VI), (VII), (VIII), (IX), (X), (XI), (XII) or (IXX), 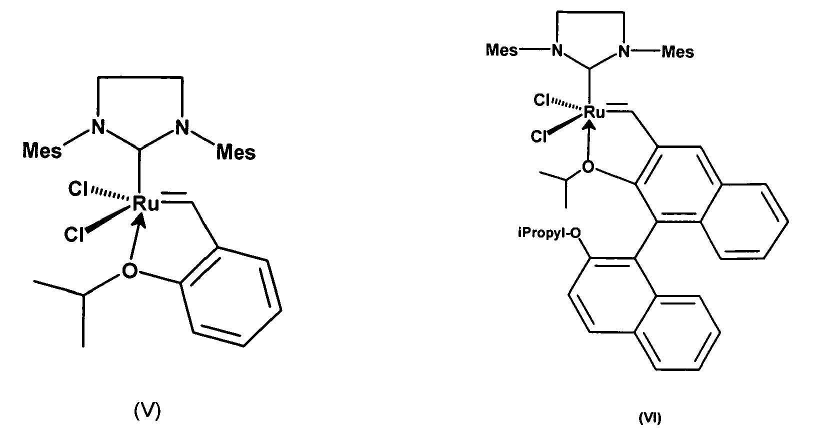 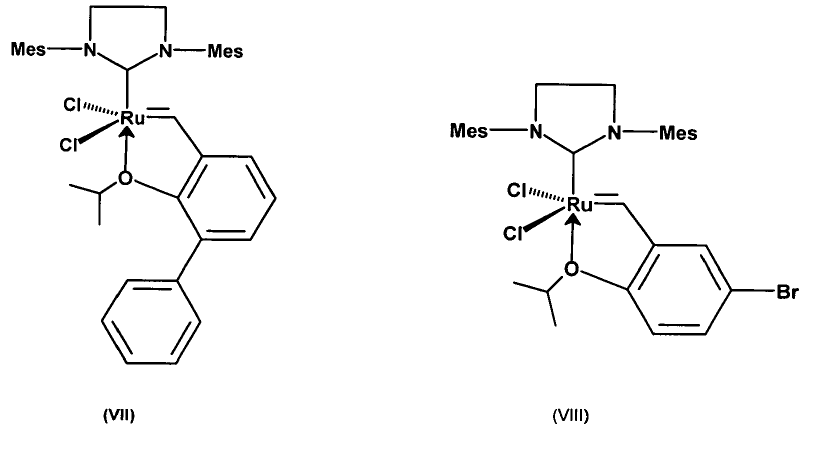 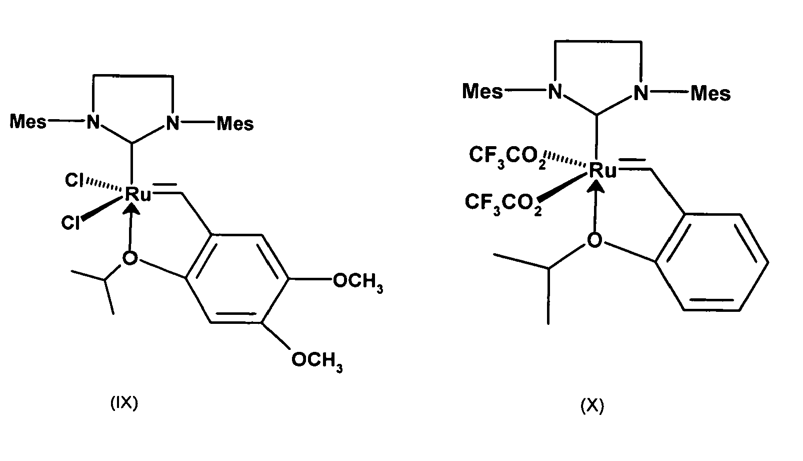 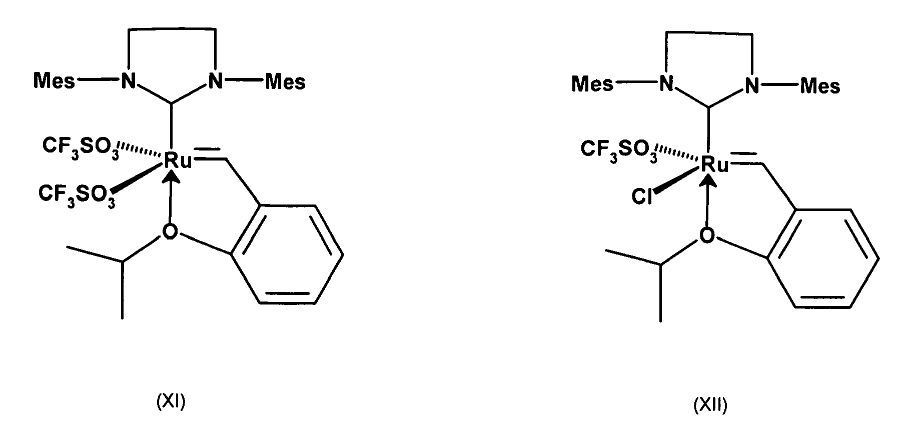 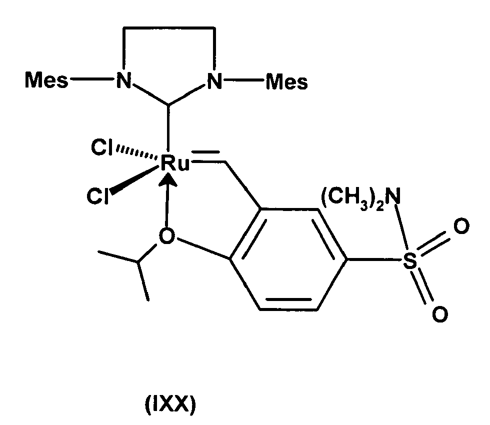 where Mes is in each case a 2,4,6-trimethylphenyl radical, is used.

15. Use according to Claim 1, wherein catalysts of the general formula (XIII), 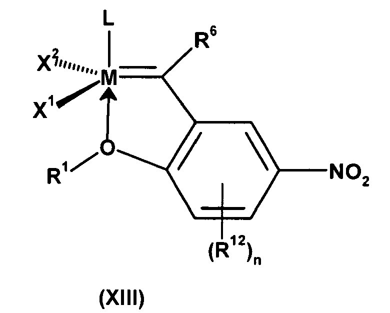 where
M, L, X¹, X², R¹ and R⁶ have the meanings given for the general formula (I),
the radicals R¹² are identical or different and have the meanings given for the radicals R², R³, R⁴ and R⁵ in the general formula (I), with the exception of hydrogen, and
n is 0, 1, 2 or 3,
are used.

16. Use according to Claim 1, wherein a catalyst of the formula (XIV) or (XV) 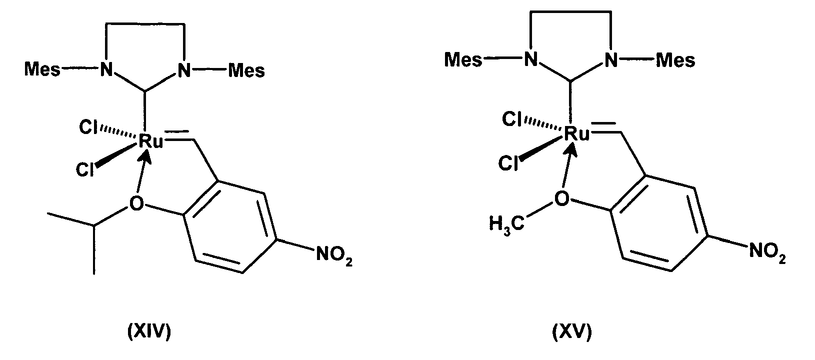 is used.

17. Use according to Claim 1, wherein a catalyst of the general formula (XVI), 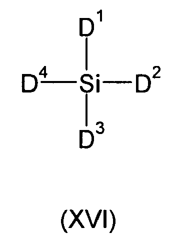 where D¹, D², D³ and D⁴ each have a structure of the general formula (XVII) which is bound via the methylene group to the silicon of the formula (XVI), 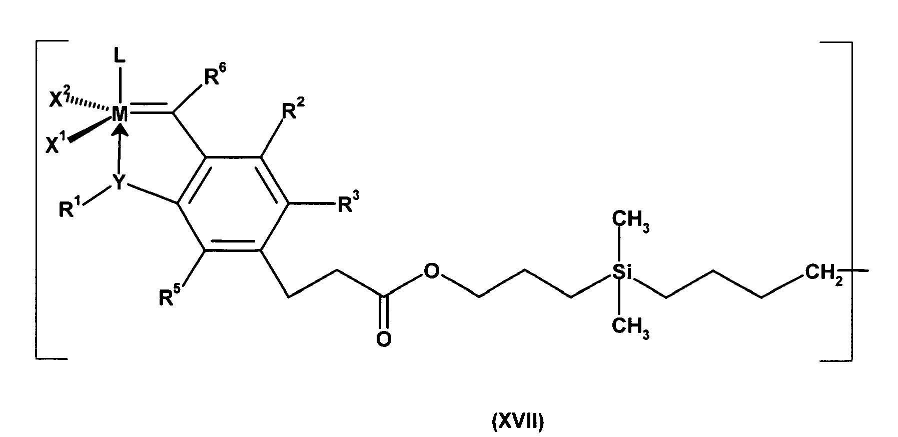 where
M, L, X¹, X², R¹, R², R³, R⁵ and R⁶ have the meanings given for the general formula (I),
is used.

18. Use according to Claim 1, wherein a catalyst of the general formula (XVIII), 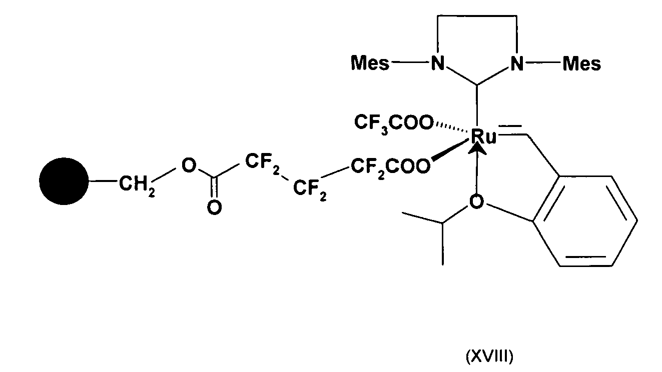 where the symbol 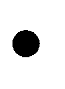 represents a support, preferably a poly(styrene-divinylbenzene) copolymer (PS-DVB), is used.

19. Use according to one or more of Claims 1 to 18, wherein the amount of catalyst used is from 5 to 1000 ppm of noble metal, preferably from 5 to 500 ppm, in particular from 5 to 250 ppm, based on the nitrile rubber used.

20. Use according to one or more of Claims 1 to 19, wherein the metathesis is carried out without a coolefin or in the presence of a coolefin which is preferably a straight-chain or branched C₂-C₁₆-olefin, particularly preferably ethylene, propylene, isobutene, styrene, 1-hexene or 1-octene.

21. Use according to one or more of Claims 1 to 20, wherein copolymers or terpolymers which comprise repeating units of at least one conjugated diene, at least one α,β-unsaturated nitrile and, if desired, one or more further copolymerizable monomers are used as nitrile rubbers.

22. Use according to one or more of Claims 1 to 21, wherein the nitrile rubbers used have a Mooney viscosity (ML 1+4 at 100°C) in the range from 30 to 70, preferably from 30 to 50.

23. Process for preparing hydrogenated nitrile rubbers, **characterized in that** a nitrile rubber is subjected to a metathetic degradation in the presence of a catalyst of the general formula (I) and the degraded nitrile rubber obtained is subsequently subjected to a hydrogenation, preferably in situ.

## Revendications

1. Utilisation de catalyseurs de formule générale (I) pour la métathèse de caoutchoucs nitriles 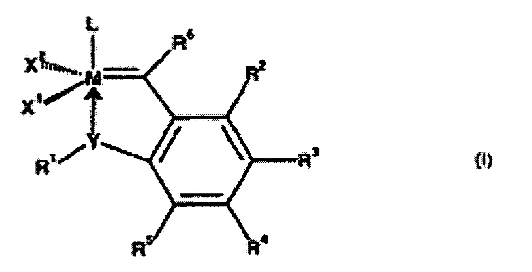 dans laquelle
M signifie ruthénium ou osmium,
Y signifie oxygène (O), soufre (S), un radical N- R¹ ou un radical P-R¹,
X¹ et X² représentent des ligands identiques ou différents,
R¹ représente un radical alkyle, cycloalkyle, alcényle, alcynyle, aryle, alcoxy, alcényloxy, alcynyloxy, aryloxy, alcoxycarbonyle, alkylamino, alkylthio, arylthio, alkylsulfonyle ou alkylsulfinyle, qui peuvent tous à chaque fois éventuellement être substitués par un ou plusieurs radicaux alkyle, halogène, alcoxy, aryle ou hétéroaryle,
R², R³, R⁴, R⁵ sont identiques ou différents et représentent l'hydrogène, des radicaux organiques ou inorganiques,
R⁶ signifie l'hydrogène, un radical alkyle, alcényle, alcynyle ou aryle, et
L est un ligand.

2. Utilisation selon la revendication 1, dans laquelle L dans la formule générale (I) représente un radical P(R⁷)₃, les R⁷ signifiant indépendamment les uns des autres alkyle en C₁-C₆, cycloalkyle en C₃-C₈ ou aryle, ou un radical imidazolidine (« Im ») éventuellement substitué.

3. Utilisation selon la revendication 2, dans laquelle le radical imidazolidine (Im) a une structure de formule générale (IIa) ou (IIb), 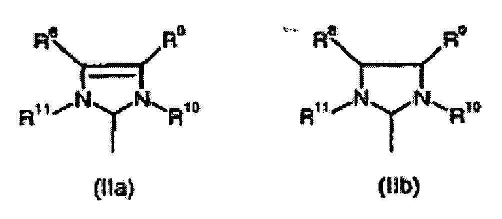 dans lesquelles
R⁸, R⁹, R¹⁰, R¹¹ sont identiques ou différents et signifient hydrogène, alkyle en C₁-C₃₀ linéaire ou ramifié, cycloalkyle en C₃-C₂₀, alcényle en C₂-C₂₀, alcynyle en C₂-C₂₀, aryle en C₆-C₂₄, carboxylate en C₁-C₂₀, alcoxy en C₁-C₂₀, alcényloxy en C₂-C₂₀, alcynyloxy en C₂-C₂₀, aryloxy en C₆-C₂₀, alcoxycarbonyle en C₂-C₂₀, alkylthio en C₁-C₂₀, arylthio en C₆-C₂₀, alkylsulfonyle en C₁-C₂₀, sulfonate d'alkyle en C₁-C₂₀, sulfonate d'aryle en C₆-C₂₀ ou alkylsulfinyle en C₁-C₂₀.

4. Utilisation selon la revendication 3, dans laquelle R¹⁰ et R¹¹ dans le radical imidazolidine (Im) sont identiques ou différents et signifient alkyle en C₁-C₁₀ linéaire ou ramifié, de manière particulièrement préférée i-propyle ou néopentyle, cycloalkyle en C₃-C₁₀, de préférence adamantyle, aryle en C₆-C₂₄, de manière particulièrement préférée phényle, sulfonate d'alkyle en C₁-C₁₀, de manière particulièrement préférée sulfonate de méthane, ou sulfonate d'aryle en C₆-C₁₀, de manière particulièrement préférée sulfonate de p-toluène.

5. Utilisation selon la revendication 3, dans laquelle le radical imidazolidine (Im) a les structures (IIIa), (IIIb), (IIIc), (IIId), (IIIe) ou (IIIf) suivantes 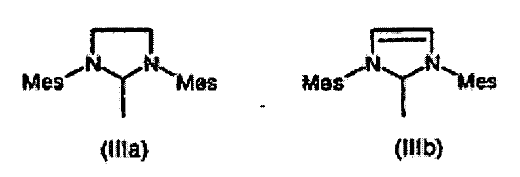 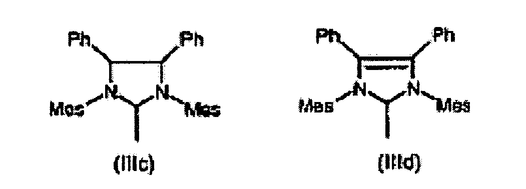 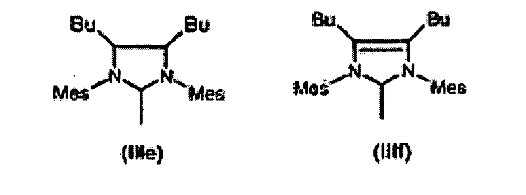 dans lesquelles Mes représente à chaque fois un radical 2,4,6-triméthylphényle.

6. Utilisation selon une ou plusieurs des revendications 1 à 5, dans laquelle X¹ et X² dans la formule générale (I) sont identiques ou différents et signifient hydrogène, halogène, pseudohalogène, alkyle en C₁-C₃₀ linéaire ou ramifié, aryle en C₆-C₂₄, alcoxy en C₁-C₂₀, aryloxy en C₆-C₂₄, dicétonate d'alkyle en C₃-C₂₀, dicétonate d'aryle en C₆-C₂₄, carboxylate en C₁-C₂₀, sulfonate d'alkyle en C₁-C₂₀, sulfonate d'aryle en C₆-C₂₄, alkylthiol en C₁-C₂₀, arylthiol en C₆-C₂₄, alkylsulfonyle en C₁-C₂₀ ou alkylsulfinyle en C₁-C₂₀.

7. Utilisation selon la revendication 6, dans laquelle X¹ et X² dans la formule générale (I) sont identiques ou différents et signifient halogène, de préférence fluor, chlore ou brome, benzoate, carboxylate en C₁-C₅, alkyle en C₁-C₅, phénoxy, alcoxy en C₁-C₅, alkylthiol en C₁-C₅, arylthiol en C₆-C₂₄, aryle en C₆-C₂₄ ou sulfonate d'alkyle en C₁-C₅.

8. Utilisation selon la revendication 6, dans laquelle X¹ et X² dans la formule générale (I) sont identiques et signifient halogène, notamment chlore, CF₃COO, CH₃COO, CFH₂COO, (CH₃)₃CO, (CF₃)₂(CH₃)CO, (CF₃)(CH₃)₂CO, PhO (phénoxy), MeO (méthoxy), EtO (éthoxy), tosylate (p-CH₃-C₆H₄-SO₃) mésylate (2,4,6-triméthylphényle) ou CF₃SO₃ (sulfonate de trifluorométhane).

9. Utilisation selon une ou plusieurs des revendications 1 à 8, dans laquelle le radical R¹ dans la formule générale (I) représente un radical alkyle en C₁-C₃₀, cycloalkyle en C₃-C₂₀ alcényle en C₂-C₂₀ alcynyle en C₂-C₂₀, aryle en C₆-C₂₄, alcoxy en C₁-C₂₀, alcényloxy en C₂-C₂₀, alcynyloxy en C₂-C₂₀, aryloxy en C₆-C₂₄, alcoxycarbonyle en C₂-C₂₀, alkylamino en C₁-C₂₀, alkylthio en C₁-C₂₀, arylthio en C₆-C₂₄, alkylsulfonyle en C₁-C₂₀ ou alkylsulfinyle en C₁-C₂₀, qui peuvent éventuellement être substitués par un ou plusieurs radicaux alkyle, halogène, alcoxy, aryle ou hétéroaryle.

10. Utilisation selon une ou plusieurs des revendications 1 à 9, dans laquelle les radicaux R², R³, R⁴ et R⁵ dans la formule générale (I) sont identiques ou différents et représentent hydrogène, halogène, de préférence chlore ou brome, nitro, CF₃, des radicaux alkyle en C₁-C₃₀, cycloalkyle en C₃-C₃₀, alcényle en C₂-C₂₀, alcynyle en C₂-C₂₀, aryle en C₆-C₂₄, alcoxy en C₁-C₂₀, alcényloxy en C₂-C₂₀, alcynyloxy en C₂-C₂₀, aryloxy en C₆-C₂₄, alcoxycarbonyle en C₂-C₂₀, alkylamino en C₁-C₂₀, alkylthio en C₁-C₂₀, arylthio en C₆-C₂₄, alkylsulfonyle en C₁-C₂₀ ou alkylsulfinyle en C₁-C₂₀, qui peuvent tous à chaque fois éventuellement être substitués par un ou plusieurs radicaux alkyle en C₁-C₃₀, alcoxy en C₁-C₂₀, halogène, aryle en C₆-C₂₄ ou hétéroaryle.

11. Utilisation selon une ou plusieurs des revendications 1 à 9, dans laquelle le radical R₆ signifie l'hydrogène, un radical alkyle en C₁-C₃₀, alcényle en C₂-C₂₀, alcynyle en C₂-C₂₀ ou aryle en C₆-C₂₄.

12. Utilisation selon la revendication 1, dans laquelle un catalyseur de formule générale (IV) 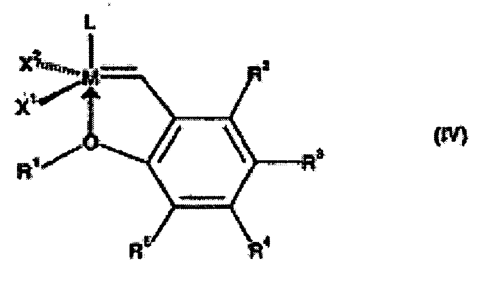 est utilisé, dans laquelle
M, L, X¹, X², R¹, R², R³, R⁴ et R⁵ ont les significations données pour la formule générale (I).

13. Utilisation selon la revendication 12, dans laquelle dans la formule générale (IV),
M signifie le ruthénium,
X¹ et X² signifient simultanément le chlore,
R¹ signifie un radical isopropyle,
R², R³, R⁴, R⁵ signifient tous l'hydrogène et
L signifie un radical imidazolidine éventuellement substitué de formule (IIa) ou (IIb) 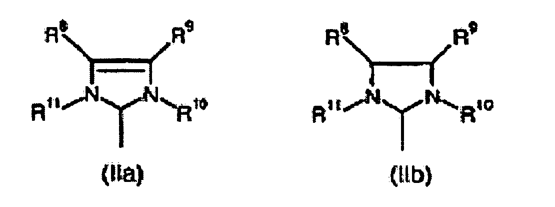 dans lesquelles
R⁸, R⁹, R¹⁰, R¹¹ sont identiques ou différents et signifient hydrogène, alkyle en C₁-C₃₀ linéaire ou ramifié, cycloalkyle en C₃-C₂₀, alcényle en C₂-C₁₀, alcynyle en C₂-C₂₀, aryle en C₆-C₂₄, carboxylate en C₁-C₂₀, alcoxy en C₁-C₂₀, alcényloxy en C₂-C₂₀, alcynyloxy en C₂-C₂₀, aryloxy en C₆-C₂₄, alcoxycarbonyle en C₂-C₂₀, alkylthio en C₁-C₂₀, arylthio en C₆-C₂₄, alkylsulfonyle en C₁-C₂₀, sulfonate d'alkyle en C₁-C₂₀, sulfonate d'aryle en C₆-C₂₄ ou alkylsulfinyle en C₁-C₂₀.

14. Utilisation selon la revendication 1, dans laquelle un catalyseur de formule (V), (VI), (VII), (VIII), (IX), (X), (XI), (XII) ou (IXX) est utilisé, dans lesquelles Mes signifie à chaque fois un radical 2,4,6-triméthylphényle

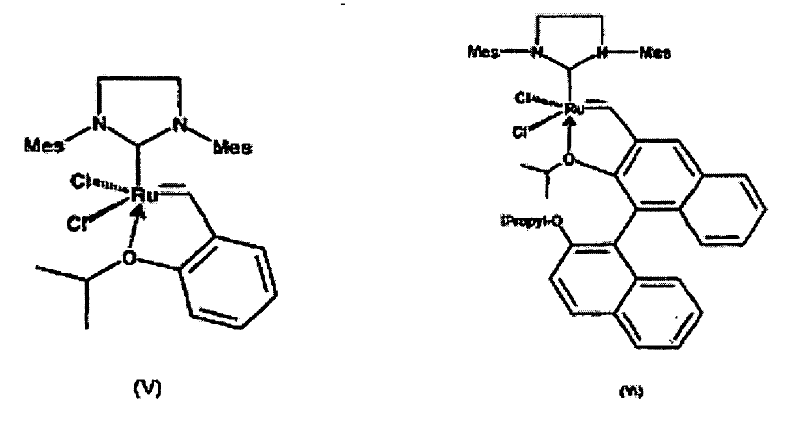

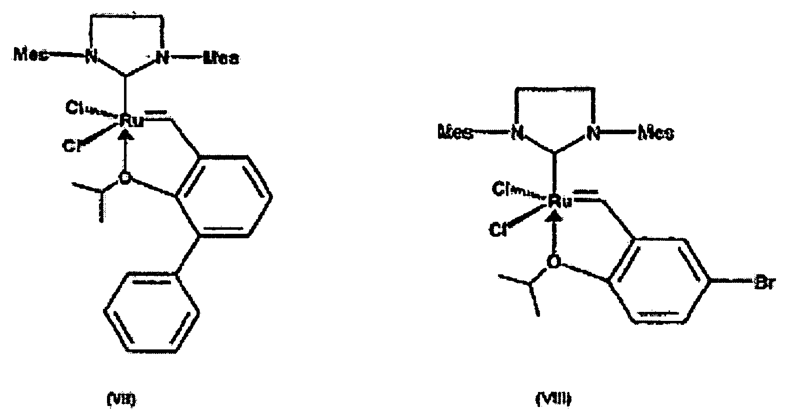

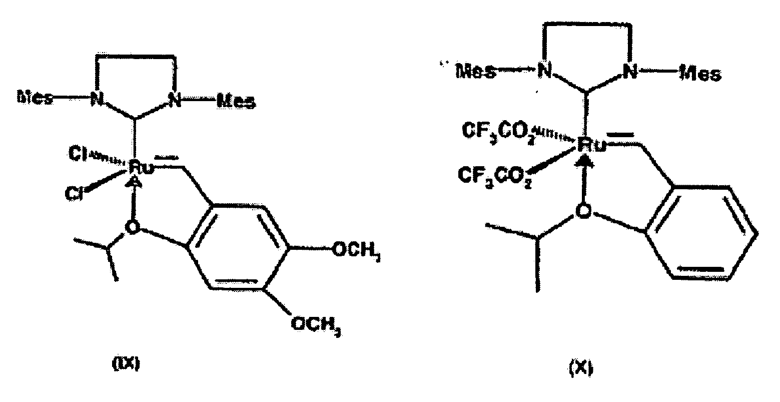

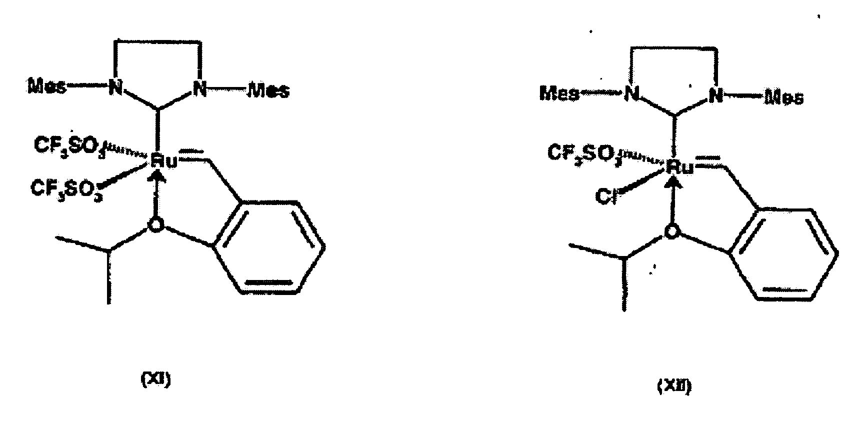

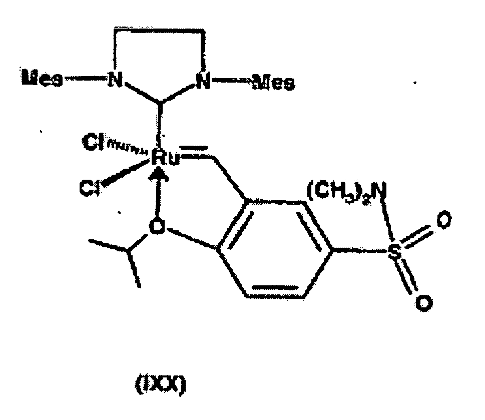

15. Utilisation selon la revendication 1, dans laquelle des catalyseurs de formule générale (XIII) sont utilisés, 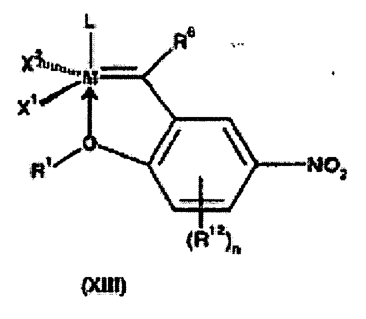 dans laquelle
M, L, X¹, X², R¹ et R⁶ ont les significations données pour la formule générale (I),
les R¹² sont identiques ou différents et ont les significations données pour les radicaux R², R³, R⁴ et R⁵ dans la formule générale (I) à l'exception de l'hydrogène, et
n vaut 0, 1, 2 ou 3.

16. Utilisation selon la revendication 1, dans laquelle un catalyseur de la formule (XIV) ou (XV) suivante est utilisé

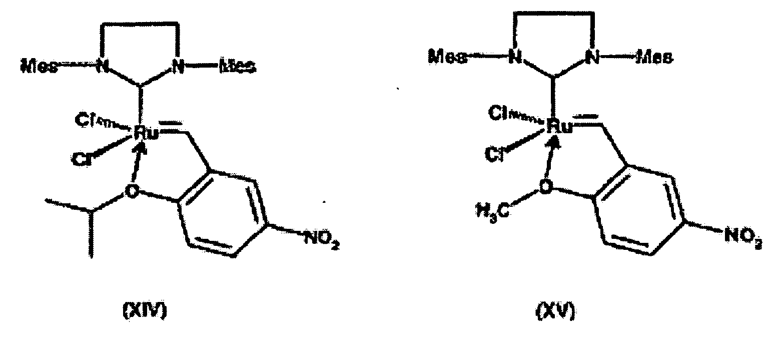

17. Utilisation selon la revendication 1, dans laquelle un catalyseur de formule générale (XVI) est utilisé 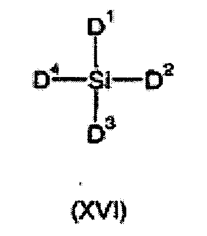 dans laquelle D¹, D², D³ et D⁴ ont à chaque fois une structure de formule générale (XVII), qui est reliée par le groupe méthylène au silicium de la formule (XVI), et 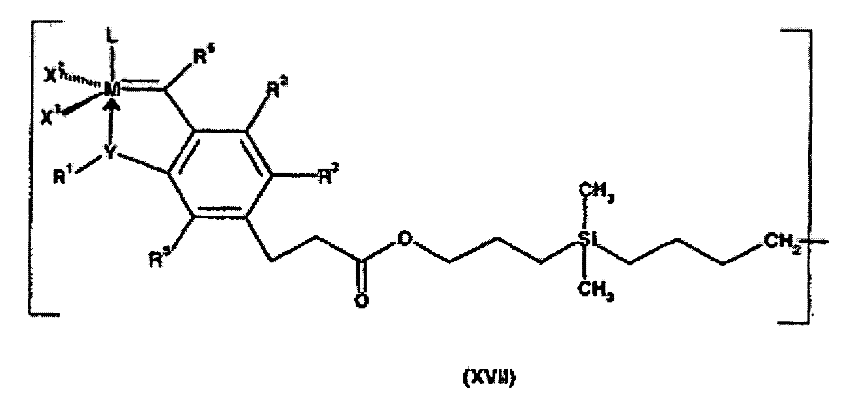 dans laquelle M, L, X¹, X², R¹, R², R³, R⁵ et R⁶ ont les significations données pour la formule générale (I).

18. Utilisation selon la revendication 1, dans laquelle un catalyseur de formule générale (XVIII) est utilisé 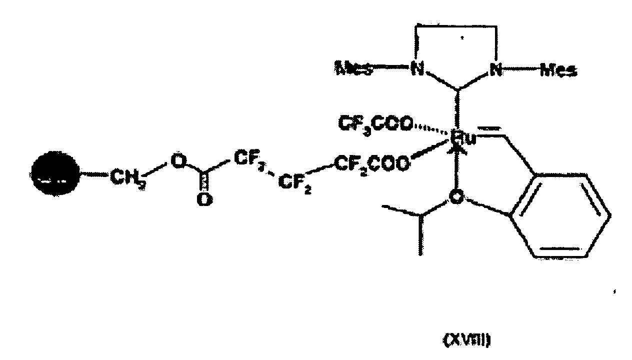 dans laquelle le symbole 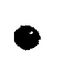 représente un support, de préférence un copolymère poly(styrène-divinylbenzène) (PS-DVB).

19. Utilisation selon une ou plusieurs des revendications 1 à 18, dans laquelle la quantité de catalyseur utilisé est de 5 à 1 000 ppm de métal noble, de préférence 5 à 500 ppm, notamment 5 à 250 ppm, par rapport au caoutchouc nitrile utilisé.

20. Utilisation selon une ou plusieurs des revendications 1 à 19, dans laquelle la métathèse est réalisée sans ou en présence d'une co-oléfine, ladite co-oléfine étant de préférence une oléfine en C₂-C₁₆ linéaire ou ramifiée, de manière particulièrement préférée l'éthylène, le propylène, l'isobutène, le styrène, le 1-hexène ou le 1-octène.

21. Utilisation selon une ou plusieurs des revendications 1 à 20, dans laquelle des co- ou terpolymères, qui contiennent des unités de répétition d'au moins un diène conjugué, d'au moins un nitrile α,β-insaturé et éventuellement d'un ou de plusieurs monomères copolymérisables supplémentaires, sont utilisés en tant que caoutchoucs nitriles.

22. Utilisation selon une ou plusieurs des revendications 1 à 21, dans laquelle les caoutchoucs nitriles utilisés présentent une viscosité de Mooney (ML 1+4 à 100 °C) dans la plage allant de 30 à 70, de préférence de 30 à 50.

23. Procédé de fabrication de caoutchoucs nitriles hydrogénés, **caractérisé en ce qu'**un caoutchouc nitrile est soumis à une décomposition par métathèse en présence d'un catalyseur de formule générale (I), puis le caoutchouc nitrile décomposé obtenu est soumis à une hydrogénation, de préférence in situ.
